(19) **Europäisches Patentamt**

**European Patent Office**

**Office européen des brevets**

(11) **EP 0 567 319 B1**

(12) **EUROPEAN PATENT SPECIFICATION**

(45) Date of publication and mention
of the grant of the patent:
**03.11.1999 Bulletin 1999/44**

(51) Int Cl.⁶: **H04N 5/44**

(21) Application number: **93303106.4**

(22) Date of filing: **21.04.1993**

(54) **Scanning line converting method for a television receiver and device thereof**

Verfahren zur Umwandlung der Abtastzeilenanzahl für einen Fernsehempfänger und Vorrichtung dafür

Méthode pour convertir le nombre de lignes de balayage dans un récepteur de télévision et dispositif d'application

(84) Designated Contracting States:
**DE GB NL**

(30) Priority: **21.04.1992 KR 668592**

(43) Date of publication of application:
**27.10.1993 Bulletin 1993/43**

(73) Proprietor: **GOLDSTAR CO. Ltd.**
**Seoul (KR)**

(72) Inventor: **Hong, Sung Hoon**
**Youngdungpo - gu, Seoul (KR)**

(74) Representative: **Hitchcock, Esmond Antony**
**Lloyd Wise, Tregear & Co.,**
**Commonwealth House,**
**1-19 New Oxford Street**
**London WC1A 1LW (GB)**

(56) References cited:
**EP-A- 0 418 709**

• **IEEE TRANSACTIONS ON CONSUMER ELECTRONICS vol. 35, no. 4 , November 1989 , NEW YORK US pages 901 - 905 W.F.YUNG ET AL 'IMPLEMENTATION OF A PSEUDO 2-D MEDIAN FILTER FOR IMAGE ENHANCEMENT'**

## Description

The present invention relates to a scanning line converting method and device for converting a television signal of an interlaced scanning system into a progressive scanning system, and more particularly to a scanning line converting method for a television receiver interpolating the scanning line by executing a two dimensional pseudomedian filtering process and device thereof.

A television picture is a one dimensional time sequential signal made into a two dimensional picture by scanning, which comes to be seen as a time and spatially continued picture by a time and space integrating operation of time. Accordingly, when the number of pictures per second is low, the time integrating effect is not sufficient resulting in frame flicker. Also, when the scanning line number is low, the space integrating effect is not sufficient resulting in the scanning line becoming visible and the picture becoming rough. An interlaced scanning system such as a NTSC system aims to increase the number of pictures per second thereby reducing the frame flicker. However, using this method, the space integrating effect is reduced and the picture becomes rough and visible compared to the picture generated by a non-interlaced scanning system using 525 doubled scanning lines.

Thus, as a scanning line doubling method for solving problems such as line structure and lack of vertical resolution resulted due to a lack of scanning lines, a line repeating system for repeatedly viewing a component of a previous scanning line, an intra-field interpolation system for interpolating by averaging values from the upper and lower scanning lines of the scanning line to be interpolated, and an inter-field interpolating system for interpolating by the scanning line of previous field of the scanning line to be interpolated, are offered.

Another known scanning method and apparatus is disclosed in EP 0,418,709 A3. This prior art document discloses an interstitial line generator for an interlaced scan to non-interlaced scan video signal converter which includes circuitry for examining a plurality of lines spatially and temporally disposed about an interstitial line location and excludes signals having amplitudes representing the relative extremes of the plurality of lines. The remaining signals are combined in predetermined proportions to generate the interstitial line.

An object of the present invention is to provide a method and device for converting a scanning line of a television receiver for interpolating a scanning line by executing a two dimensional pseudomedian filtering operation by utilizing a peripheral pixel value of a pixel to be interpolated.

Another object of the present invention is to provide a method and device for converting a scanning line of a television receiver for interpolating a scanning line by executing a two dimensional pseudomedian filtering operation in response to movement detection in a video signal.

In accordance with the invention, as defined in claims 1 and 10, the above objects are accomplished using a scanning line converting method for a television receiver comprising setting a centre value(g) of a peripheral pixel value of a pixel(i) to be interpolated in a video signal of an interlaced scanning system in a procedure which includes computing a sample value to be applied to said centre value(g) and a linear combination of non-linear operations being a twodimensional pseudomedian filtering (PMED) of said peripheral pixel value; 2/1 time compressing respectively the signal generated by said filtering and the video signal of an interlaced scanning system; and selectively switching said 2/1 time compressed signals thereby converting the interlaced scanning system to a progressive scanning system, CHARACTERISED IN THAT the setting of said centre value (g) of a peripheral pixel value of a pixel(i) to be interpolated is in accordance with the movement in said video signal of an interlaced scanning system, AND IN THAT the two-dimensional pseudomedian filtering computation has an expression as below with six peripheral pixel values existing at the upper and lower scanning lines of said pixel (i) to be interpolated:

$$PMED\{a,b,c,g,d,e,f\} = 0.5 \, Min\{Max\,(a,b,g,), Max(b,c,g),$$

$$Max(d,e,f), Max(e,f,g)\} + 0.5$$

$$Max\{Min(a,b,g), Min(b,c,g), Min$$

$$(d,e,f), Min\,(e,f,g)\}$$

wherein a,b,c represent pixel values existing at the upper scanning line, d,e,f, are pixel values existing at the lower scanning line, and g is said centre value, AND IN THAT

a control signal is generated in accordance with an edge pattern of vertical, horizontal and diagonal directions by combining said six peripheral pixel values; and one of average values of vertical average value, horizontal average value, and diagonal average value, said average values being computed from at least two of said six peripheral pixel values, is selected in accordance with said control signal thereby setting to said centre value(g) of pseudomedian filtering computation.

Prior and systems end, the invention will now be described by way of example and with reference to the accompanying drawings wherein:

Fig. 1A and Fig. 1B are diagrams for explaining a conventional line repeating system, in which Fig. 1(A) is a circuit diagram and Fig. 1(B) is a conceptive diagram,

Fig. 2A and Fig. 2B are diagrams for explaining a conventional interpolating system, in which Fig. 2(A) is a circuit diagram and Fig. 2(B) is a conceptive diagram,

Fig. 3A and Fig. 3B are diagrams for explaining a conventional inter-field interpolating system, in which Fig. 3 (A) is a circuit diagram and Fig. 3(B) is a conceptive diagram,

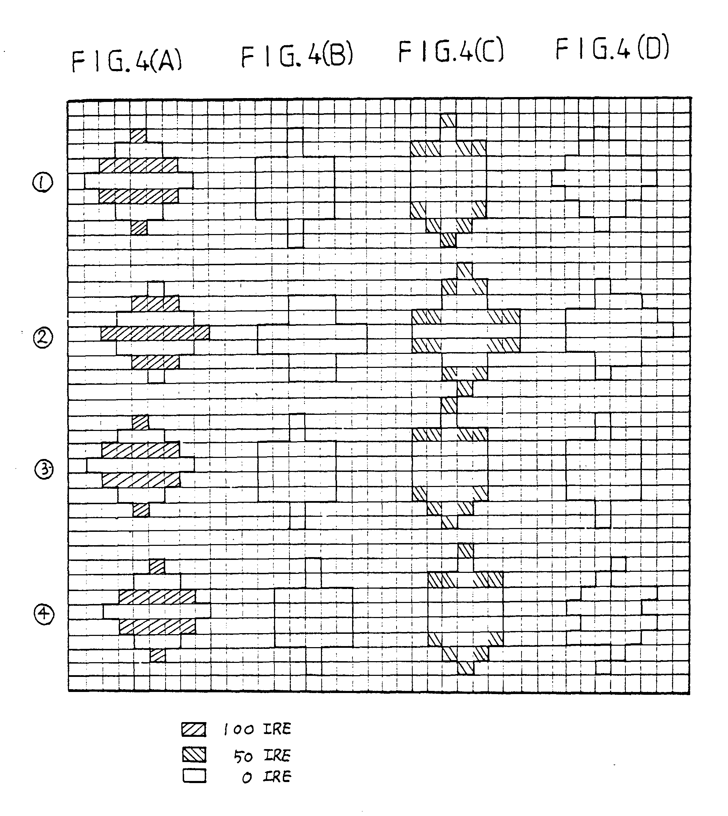

Fig. 4 is a diagram for explaining an interpolated result by a conventional scanning line interpolating system,

Fig. 5 is a diagram showing a 3x3 square two dimensional pseudomedian filter applied in an embodiment of the present invention,

Fig. 6A and Fig. 6B are diagrams for explaining a different point for a median filter and a pseudomedian filter, in which Fig. 6(A) is a diagram showing a filter for 135° edge, Fig. 6B is 90° edge, and Fig. 6C is 45° edge,

Fig. 7 is a block diagram of a line doubler in accordance with the present invention,

Fig. 8 is a detailed block diagram of a pseudomedian filtering section,

Fig. 9 is a detailed circuit diagram showing an example of a sample value computer,

Fig. 10 is a detailed circuit diagram showing another example of the sample value computer,

Fig. 11s are characteristic diagrams of control signal in accordance with the edge pattern, in which Figs. 11A to 11D show various examples in case of diagonal edge, and Fig. 11F is a diagram showing a case of horizontal edge,

Fig. 12 is a diagram for explaining an offered interpolating method in a two dimensional region in accordance with the present invention,

Fig. 13 is a circuit diagram of a scanning line interpolater using a pseudomedian filter considered with an edge pattern,

Fig. 14 is a block diagram of 3x1 MIN filter of Fig. 13,

Fig. 15 is a block diagram of 3x1 MAX filter of Fig. 13,

Fig 16 is a block diagram of 4x1 MIN filter of Fig. 13,

Fig. 17 is a block diagram of 4x1 MAX filter of Fig. 12,

Fig. 18 is a circuit diagram of a scanning line interpolater using a pseudomedian filter considering a vertical average signal,

Fig. 19 is a circuit of a scanning line interpolater using a pseudomedian filter utilizing movement information,

Fig. 20 is a diagram for explaining a method for determining a center value of the pseudomedian filter by utilizing a movement information,

Fig. 21 is a circuit diagram of a scanning interpolater by a pseudomedian filter which does not use a center sample value,

Fig. 22 is a diagram showing an example expanded with the pseudomedian filter,

Fig. 23 is a circuit diagram of expression 3,

Fig. 24 is a detailed circuit diagram of Fig. 23,

Fig. 25 is a circuit diagram of expression 4,

Fig. 26 is a detailed circuit diagram of Fig. 25.

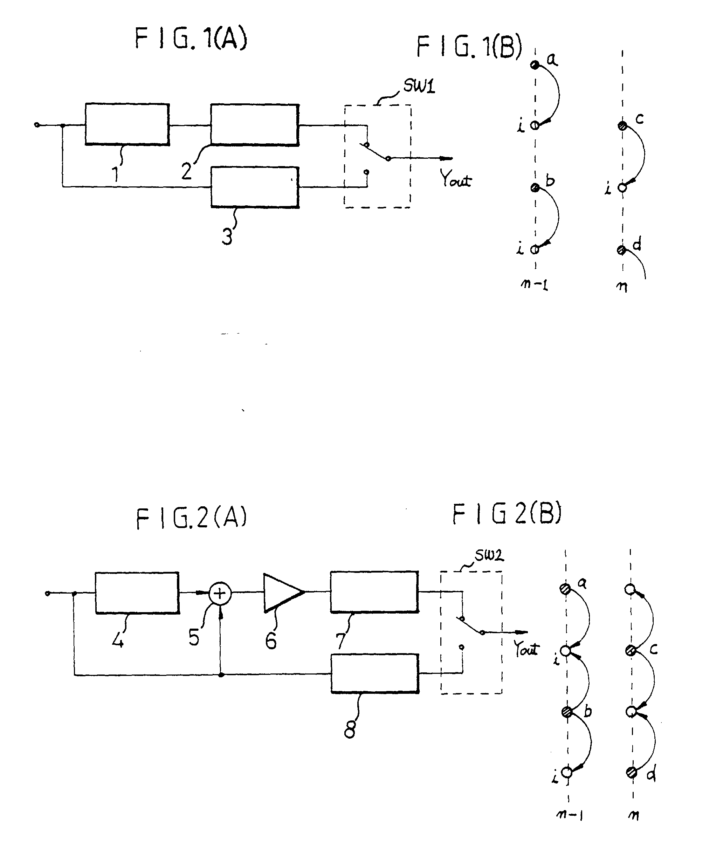

Fig. 1(A) and (B) show respectively a circuit diagram and a conceptive diagram explaining a line repeating system. The system comprises one line memory section 1 for outputting a signal by one line delaying, an input video signal Yin, time compressors 2, 3 for outputting a signal by compressing a signal delayed through the one line memory section 1 and the video signal Yin respectively to 2/1 time, and a switch SW1 for selecting a desired output signal from the output signals of the time compressors 2,3.

The input video signal Yin is delayed by the one line memory section 1 and this delayed signal is then time compressed by the 2/1 time compressors. On the other hand, the original video signal Yin is time compressed by the 2/1 time compressor 3. The switch SW1 selects an output value of the first time compressor 2 for a scanning line i to be interpolated, and selects an output value of the second time compressor 3 for the original scanning lines a,b,c,d. Here, a switching clock of the switch SW1 becomes 1/2 of one scanning period of the input signal.

Fig. 2 (A) and Fig. 2(B) show respectively a circuit diagram and a conceptive diagram explaining an intra-field interpolation system. The system comprises a one line memory section 4 for outputting a signal by one line delaying the input video signal Yin, an adder 5 for outputting a signal by adding a signal delayed at the one line memory section 4 and the video signal Yin, 1/2 amplifier 6 for amplifying a signal outputting through the adder 5 to a 1/2 level, time compressors 7,8 for respectively time compressing a signal amplified through the 1/2 amplifier 6 and the video signal Yin, and a second switch SW2 for selecting a desired output signal from the output signals of the time compressors 7,8.

A scanning line i within a field n-1,n to be interpolated is made by averaging the upper and lower scanning lines a,b and c,d. The input video signal Yin is one line delayed by the one line memory section 4 and the delayed signal is added to the video signal Yin by the adder 5. The added signal is applied to one terminal of the second switch SW2 through the 1/2 amplifier 6 and the time compressor 7. On the other hand, the video signal Yin is applied to another terminal of the second switch SW2 through the time compressor 8. The second switch SW2 selects an output signal of the time compressor 7 for the scanning line i to be interpolated and selects an output of the time compressor 8 for the original scanning lines a,b and c,d.

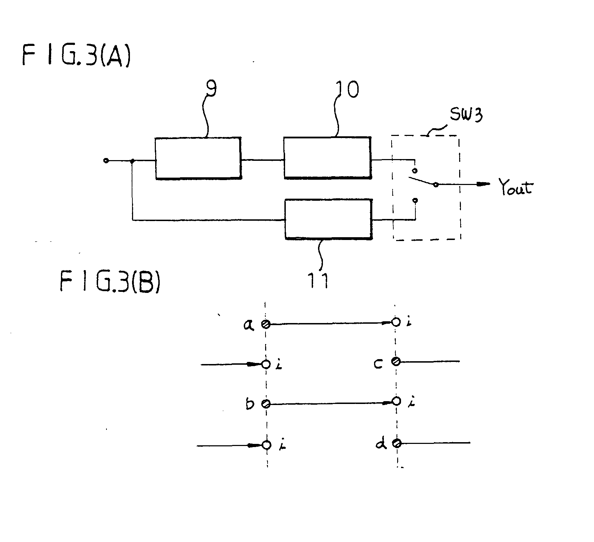

Fig. 3(A) and (B) show respectively a circuit diagram and a conceptual diagram explaining an intra-field interpolation system. The system comprises one field memory section 9 for one field delaying the input video signal Yin, time compressors 10,11 for compressing a signal delayed through the one field memory section 9 and the video signal Yin respectively to 1/2 time, and a third switch SW3 for selecting a desired output signal from the output values of the time compressors 10,11.

The video signal Yin is one field delayed by the one field memory section 9 and then time compressed at the time compressor 10. The video signal Yin is time compressed at the time compressor 11. The third switch SW3 selects an output signal from the time compressor 10 for a scanning line to be interpolated, and selects an output signal from the time compressor 11 for original scanning lines a,b, and c,d.

The interpolating result by the conventional scanning line interpolating system described above can be understood from Fig. 3. Fig. 3 shows the degree that an original video signal moves during one field period, and shows examples of a picture which is a still picture, moved by one sample to the right($\rightarrow$), upwards($\uparrow$), and diagonally ($\nearrow$).

Fig. 3(B) is an interpolated result using line repeating, and it is possible to know that step edge appears after in the picture having a still picture and a low speed movement, and Fig. 3(C) is an interpolated result by a line averaging and it is possible to know that an edge portion of the picture having a still picture and a low speed movement becomes indistinct, and an exact interpolation is made in the still picture but the interpolation is made inexactly in a picture having a movement.

Hereinafter, a preferred embodiment of the present invention will be described in more detail with reference to the accompanying drawings.

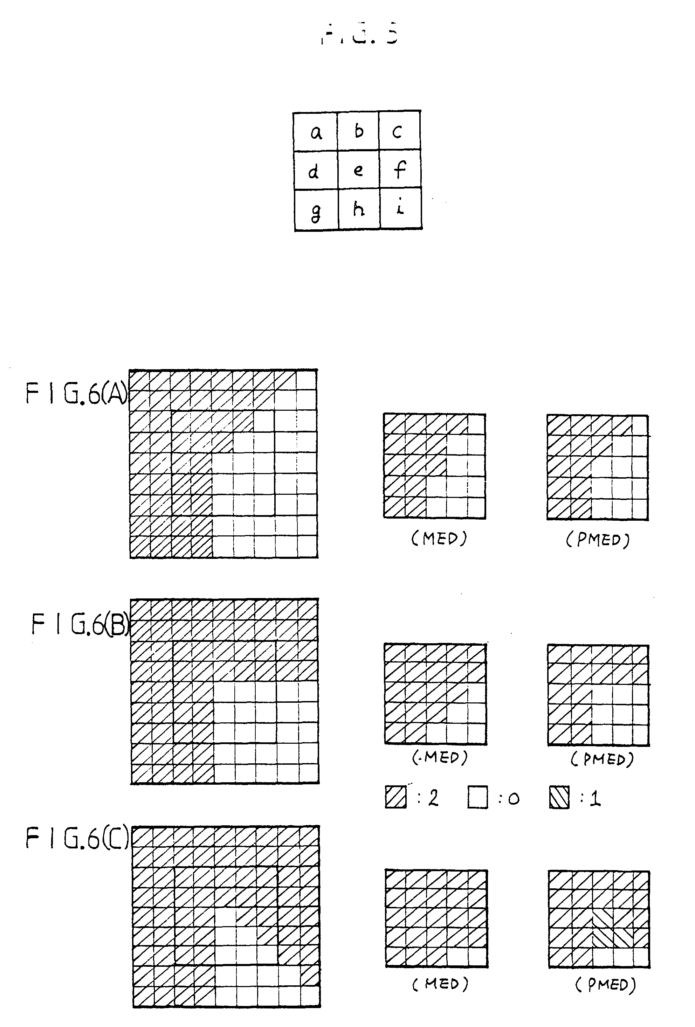

Fig. 5 is a diagram showing a 3x3 square two dimensional pseudomedian (PMED) filter. In the case of one dimensional PMED filter, where the filter length is 3, an operation of PMED is expressed as :

$$PMED\{a,b,d\}=0.5 \times Max\{Min(a,b),Min(a,b)\}$$

$$+0.5 \times Min\{Max(a,b),Max(a,b)\}$$

when the filter length is 5, it is expressed as :

$$PMED\{a,b,c,d,e\}=0.5 \times Max\{Min(a,b,c),Min(b,c,d),Min(c,d,e)\}$$

$$+0.5 \times Min\{Max(a,b,c),Max(b,c,d),Max(c,d,e)\}$$

The filter characteristic of the two dimensional pseudomedian filter is changed in accordance with the filter size and form. For instance, in case of selecting the filter size and form as shown in FIG.5, operation of the PMED filter is expressed as :

$$PMED\{a,b,c,d,e,f,g,h,i\}=0.5 \times Max\{Min(a,b,d,e),Min(b,c,e,f),$$

$$Min(d,e,g,h),Min(e,f,g,i)\} + 0.5$$

$$\times Min\{Max(a,f,d,e),Max(b,c,e,f),$$

$$Max(d,e,g,h),Max(e,f,g,i)\}$$

FIG.6 shows a different point of the median filter and the pseudomedian filter in accordance with the edge characteristic. FIG.6(A) shows an output when a 5x5 square median filter and PMED filter are applied to the 135° edge, FIG.6(B) shows a filter output when a 5x5 square median filter and PMED filter are applied to the 90° edge, and FIG. 6(C) shows an output of filter when a 5x5 square median filter and PMED filter are applied to the 45° edge.

It is possible to know from the filter output of FIG.6(A) to FIG.6(C) that the PMED filter corresponds better for the edge characteristic than the median filter, and since the PMED filter uses a linear operation as an adding process, an aliasing problem occurring at the median filter can be solved, and since a complete median value is not calculated, a calculating amount becomes decreased.

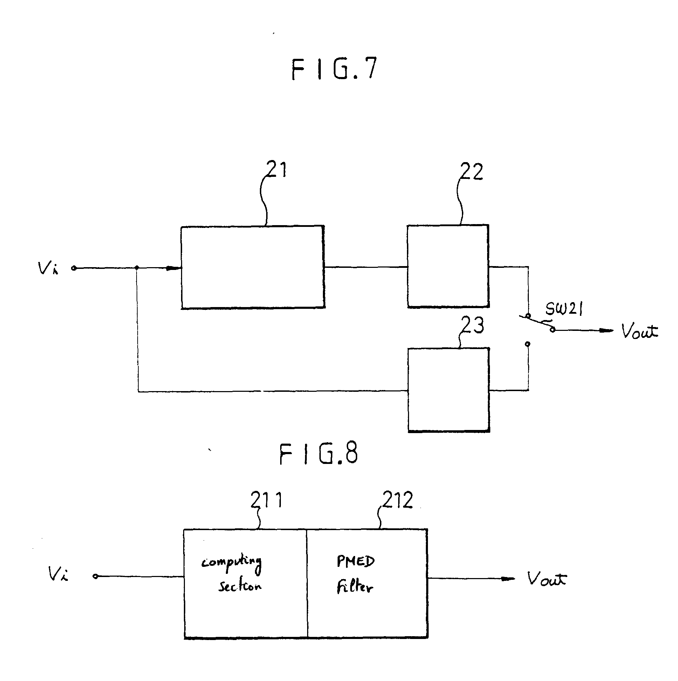

FIG.7 is a block diagram showing the entire configuration of a line doubler in accordance with an embodiment of the present invention, which comprises a PMED filter section 21 for outputting a signal by making an input video signal Vi into a signal utilized for an interpolation; time compressors 22,23 for 2/1 time compressing respectively a signal to be utilized for an interpolation at the PMED filtering section 21 and the input video signal Vi; and a switch SW21 for outputting a signal by selecting in accordance with each position to be interpolated and original signal position from the time compressed signals at the time compressors 22,23.

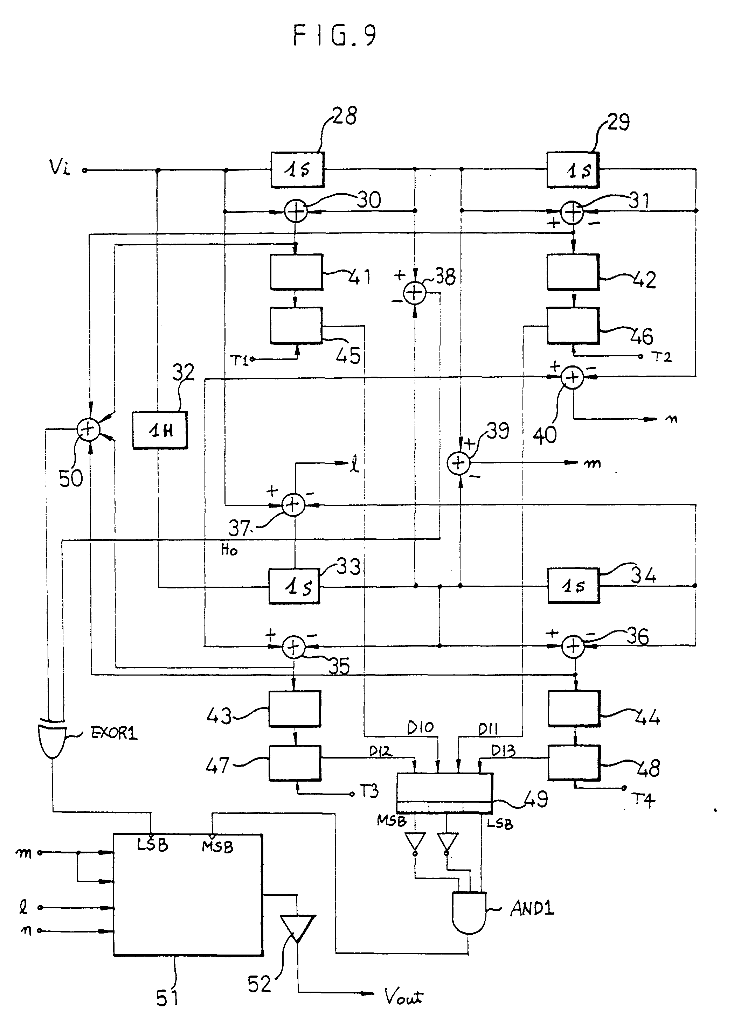

FIG.8 is a detailed block diagram of the PMED filtering section 21 of FIG.7, which comprises a computing section 211 for computing a sample value to be applied to a center value of the PMED filter 212; and a PMED filter 212 for executing a filtering operation by utilizing peripheral pixel value to a sample value computed at the computing section 211 and upper and lower scanning lines of pixel to be interpolated.

FIG.9 is an example of a detailed circuit diagram of the computing section 211 of FIG.8. It comprises : sample memory sections 28,29 for delaying the input video signal Vi in turn; an adder 30 for synthesizing the input video signal Vi and a signal delayed at the sample memory section 28; an adder 31 for synthesizing a delayed signal of the sample memory section 28 and a delayed signal of the sample memory section 29; one line memory section 32 for outputting a signal by delaying the input video signal Vi; sample memory sections 33,34 for outputting a signal by delaying in turn again the delayed signal of the one line memory section 32; an adder 35 for synthesizing the delayed signals of the one line memory section 32 and the sample memory section 33; an adder 36 for synthesizing the delayed signals of the sample memory sections 33,34; an adder 37 for summing the signals delayed by the input video siganl Vi and the sample memory section 34 whereby making a sum $l$ of a 135° diagonal component signal; adders 38,39 for summing the delayed signals of the sample memory sections 28,33 whereby generating a vertical direction control signal Ho and simultaneously making a sum m of a vertical direction component signal; an adder 40 for summing the delayed signal of the sample memory section 29 and the delayed signal of the one line memory section 32 whereby making a sum n of a 45° diagonal component signal; absolute value generating sections 41,42,43,44 for respectively generating an absolute value by the signals outputted at the adders 30,31,35,36; comparing sections 45,46,47,48 for comparing the absolute values generated at the absolute value generating sections 41,42,43,44 with each established reference values T1,T2,T3,T4; a bit adder 49 for summing control signals D10,D11,D12,D13 outputted from the comparing sections 45,46,47,48 and then outputting two high-order bits and one low-order bit through an AND gate AND1; an adder 50 for summing the output signals of the adders 30,31,35,36 whereby outputting a sign bit of difference signal component; an exclusive OR gate EXOR1 for exclusively, logically summing the sign bit of said adder 50 and the horizontal control signal Ho of said adder 38; a multiplexer 51 for selecting the sum n of the vertical component and the sum n, 1 of the 45° and 135 diagonal components in accordance with the high-order and low-order control signals MSB,LSB outputted from the AND gate AND1 and the exclusive OR gate EXOR1 whereby outputting through the 1/2 amplifier 52.

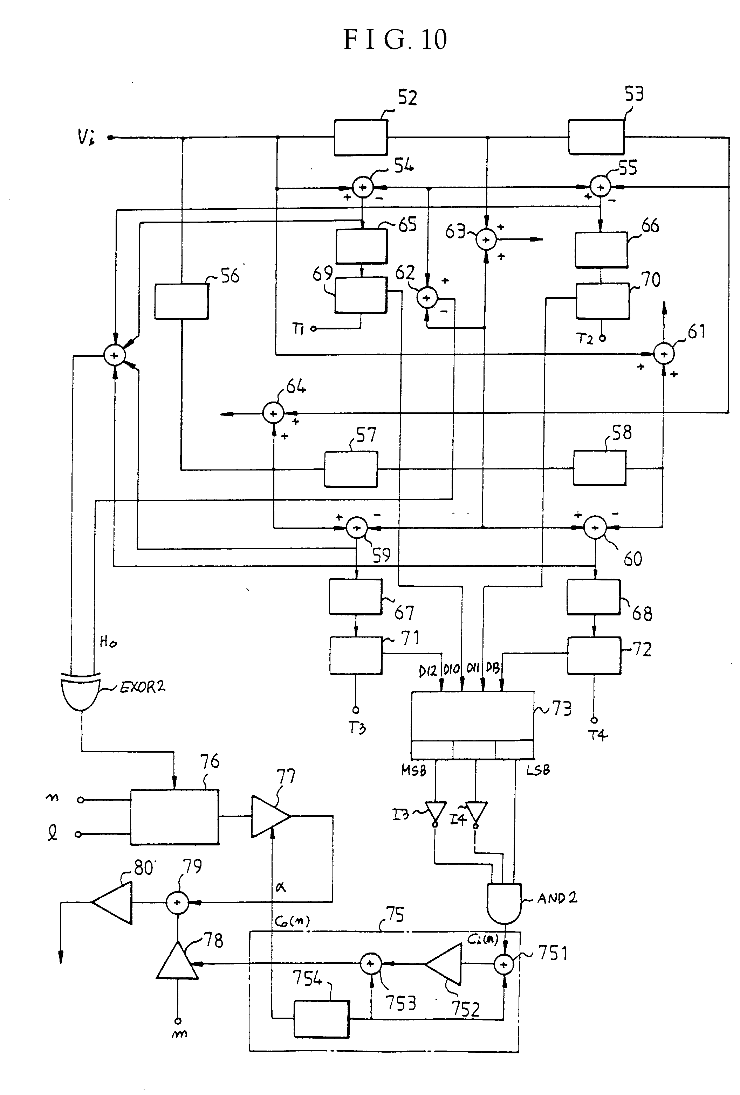

FIG.10 is another example of a detailed circuit diagram of the computing section 211 of FIG.8. It comprises : an input video signal Vi and one line memory section 56; an adder 61 for summing the signals delayed by the sample memory sections 57,58 whereby making the sum $l$ of the 135° diagonal component signal; adders 62,63 for summing the delayed signal of the sample memory section 52 and the signal delayed by the one line memory section 5 and the sample memory section 57 whereby making a sum m of the vertical direction control signal Ho and the vertical direction component signal; an adder 64 for summing the delayed signal of the sample memory sections 52,53 and the delayed signal of the one line memory section 56 whereby making a sum n of the 45° diagonal component signal; comparing sections 69,70,71,72 to compare the absolute values from the adders 54,55,59,60 and the absolute value generating sections 65,66,67,68 with the established reference values T1,T2,T3,T4 whereby outputting respectively the control signals D10,D11,D12,D13 in accordance with the edge pattern; a bit adder for adding the control signals D10,D11,D12,D13 and then outputting two high-order bits and one low-order bit through the inverter 13,14 through the AND gate AND2; an exclusive OR gate EXOR2 for exclusively, logically summing the summed output signal of the adders 54,55,59,60 at the adder 74 and the horizontal control signal outputted from a sign bit; IIR filter section 75 which consists of two adders 751,753 and an amplifier 752 and a sample memory section 754. The output signal of an AND gate AND2 is amplified at an amplifier 752 through the adder 751 and then generates an output control signal $\alpha$ from the amplified signal through an adder 753 and simultaneously delays the output control signal at a sample memory section 754 whereby feeding back to the adders 751,753. The circuit also comprises: a multiplexer 76 for outputting a signal by selecting the sums n,1 of the 45° and 135° diagonal components in accordance with the output signal of the exclusive OR gate EXOR 2; a variable amplifier 77 for variably amplifying the output of the multiplexer 76 by the output control signal $\alpha$ from the IIR filter section 75; a variable amplifier 78 for variably amplifying the sum m of the vertical component of the output control signal of the IIR filter section 75; and an adder 79 for synthesizing the output signal of the variable amplifiers 77,78 whereby outputting to an 1/2 amplifier 80.

The operation of a line doubler in accordance with the present invention constructed as mentioned above, will be as follows.

The line doubler of FIG.7 makes a signal to be utilized for an interpolation by the PMED filtering section 21 as shown in FIG.9 and FIG.10 by taking a separated luminance siganl and a chrominance signal as the input siganl Vi relative to the conventional TV signal.

This signal to be utilized for the interpolation and the input video signal Vi are respectively 1/2 time compressed at the time compressors 22,23 and then outputted by selecting the output signal of the time compressor 23 for an original signal position by the switch SW21, or selecting the output signal of the time compressor 22 for the position to be interpolated. At this moment, a switching clock of the switch SW21 is TH/1(for instance, the TH is approximately 63.5 μsec in case of NTSC).

The video signal Vi of the interlaced scanning system inputted to the computing section 211 makes a sum $l$ of the 135° diagonal component signal by summing with the signal delayed by the one line memory section 32 and the sample memory sections 33,34, and the delayed signal of the sample memory section 28 and the signal delayed by the one line memory section 32 and the sample memory section 33 are summed whereby a sum m of the vertical direction component signal is made. The signals delayed by the sample memory sections 23,29 and the delayed signal of the one line memory section 32 are summed whereby a summed signal n of the 45° diagonal component signal is made.

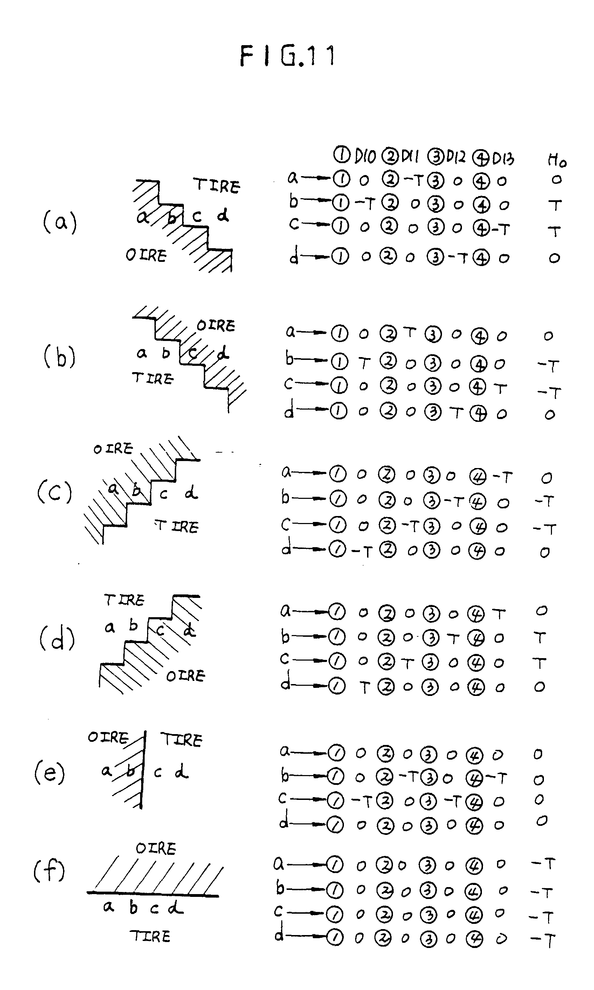

The output signals of the adders 30,31,35,36 generaate the control signals D10,D11,D12,D13 in accordance with the edge pattern as shown in FIG.11(A) to (F) respectively through the absolute value generating sections 41,42,43,44 and the comparing sections 45,46,47,48. The vertical direction control signal Ho uses an output signal of the adder 38 being a sign bit of the difference signal component of the vertical direction.

The control signals D10,D11,D12,D13 are summed at a bit adder 49 and then two high-order bits(MSB) and one low-order bit(LSB) generated by the inverters I1,I2 are inputted to the AND gate AND1. At this moment, when the edge pattern is a pattern(45° or 135°) of diagonal direction, the output of the AND gate AND1 is high state, and when it is an edge of horizontal or vertical direction, the output of the AND gate AND1 becomes low state.

The difference signals made by the adders 30,31,35,38 are summed at the adder 50 which outputs as a sign bit(1 bit). The sign bit(1 bit) is exclusively logically summed with the signal bit(Ho) of the vertical difference signal at the exclusive OR gate EXOR1, and when its value is the same as the signal bit, since it is 45° edge, a low level (0) value is outputted, and when it is not the same value as the signal bit, since it is 135° edge, a high level(1) value is ouputted.

The output signal of the AND gate AND1 and the output signal of the exclusive OR gate EXOR1 are used as high order and low order control signals MSB,LSB of the multiplexer 51. When the two control signals MSB,LSB are high state 1,1, n value being a sum of the 45° diagonal component is outputted as 0,0, or else it is 0,1, and m value being a sum of the vertical component is outputted. And, when it is 1,0, $l$ value being a sum of the 135° diagonal component is outputted.

The output signal of the multiplexer 51 is ampified by the 1/2 amplifier 52 and then applied to the PMED filter 212.

On the other hand, the computing section 211 of FIG.10 which shows another example of the computing section 211, makes 1 being a sum of the 135° diagonal component, m being a sum of the vertical direction component, and n value being a sum of the 45° diagonal component by the method as described with reference to FIG.9, and makes the control signals D10,D11,D12,D13 and the vertical direction control signal Ho.

The output signal of the exclusive OR gate EXOR2, that is, the control signal generated by judging whether the edge pattern of diagonal direction is 45° or 135° is applied to the multiplexer 76 which outputs a sum 1 of the 135° component or a sum n of the 45° component.

The output signal of the AND gate AND2, that is, the control signal generated by judging yes or no for the diagonal edge pattern is maintained with consistency by the infinite impulse response IIR filter section 75. The IIR filter section 75 is a filter which maintains the consistency of the control signal by judging the edge pattern and preventing a remarkable picture quality reducing phenomenon due to a judgement error. When assuming that the input to the IIR filter section 75 is Ci(n), its output is computed as Co(n)=K Ci(n)+(1-K)Co(n-1).

And, a frequency response of the IIR filter

$$\text{section 75 is } H(e^{j\omega}) = \frac{1}{1-(1-K)e^{-j\omega}}$$

It is possible to know that the output signal being sensitive to the input signal generated simultaneously with a K(constant) value becomes bigger. According to this embodiment, it is suitable to select a K value of 0.5 - 0.9.

The output signal Co(n) of the IIR filter section 75 is multiplied by a sum of the diagonal component being an output of the multiplexer 76 at the variable amplifier 77, and multiplied by a sum of the vertical component at the variable amplifier 78.

These multiplied two signals are added by the adder 79 to produce a sample to be utilized for the interpolation through the 1/2 amplifier 80.

FIG.11 is a diagram showing a characteristic of the control signal in accordance with the edge pattern. The cotrol signals D10,D11,D12,D13,Ho can be obtained using the following expression.

$$D10 = a\text{-}b, \text{ that is, } [X\text{-}1(n\text{-}1)\text{-}X\text{-}1(n)],$$

$$D11 = b\text{-}c, \text{ that is, } [X\text{-}1(n)\text{-}X\text{-}1(n+1)],$$

$$D12 = d\text{-}e, \text{ that is, } [X+1(n\text{-}1)\text{-}X+1(n)],$$

$$D13 = e\text{-}f, \text{ that is, } [X+1(n)\text{-}X\text{-}1(n+1)],$$

$$Ho = b\text{-}e, \text{ that is, } [X\text{-}1(n)\text{-}X+1(n)]$$

In the case of the diagonal edge changing in diagonal direction a shown in FIG.11(A) to FIG.11(D), a value exceeding a predetermined threshold voltage of the edge pattern control signals D10,D11,D12,D13 is only one, and in case of the 135° edge, it is possible to know that a value exclusively and logically summed, the sign bit of the sum of the edge pattern control signals D10,D11,D12,D13 and the sign bit of the vertical direction control signal Ho is +1. In case of the 45° edge, a value exclusively and logically summed, the sign bit of the sum of the edge pattern control signals D10,D11,D12,D13 and the sign bit of the vertical direction control signal Ho becomes 0.

In the case of the vertical edge as shown in FIG.11(E), the vertical direction control signal Ho does not exceed a predetermined threshold voltage value, and it is possible to know that a value exceeding a predetermined threshold votage in the edge pattern control signals D10,D11,D12,D13 is 0 or more than 2.

In the case of the horizontal edge as shown in FIG.11(F), the vertical direction control signal Ho exceeds a predetermined threshold voltage, and it is possible to know that a value exceeding a predetermined threshold voltage of the edge pattern control signals D10,D11,D12,D13 is not present.

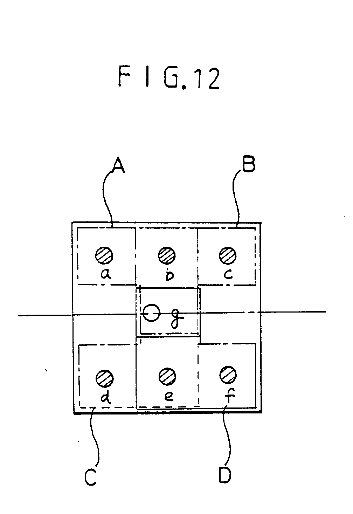

Accordingly, in a two dimensional region as shown in FIG.12, when assuming a pixel to be interpolated is i, the pixel components a,b,c,d,e,f of the upper and lower scanning lines of the pixel position to be interpolated and a pixel value g to be substituted to a centre value of the pseudomedian filter are executed by a pseudomedian filter process converted to be suitable for the scanning line interpolation so that a pixel value to be utilized for the interpolation is computed. The computation of this pixel(sample) value g is obtained by considering the complexity of the picture quality and the hardware, and in the present invention, it will be explained by exemplifying for a sample value gernerating system in accordance with the edge pattern, a system utilizing a vertical average value, a system utilizing a vertical average and previous field value, and a system of not using a centre sample value.

A value of the pixel i to be finally interpolated is obtained by PMED computing the pixel values a,b,c,d,e,f of the upper and lower scanning lines of the pixel position to be interpolated and a sample value g computed in accordance with the edge characteristic. The computation is as follows.

$$PMED\{a,b,c,g,d,e,f\}=0.5xMin\{Max(a,b,g),Max(b,c,g),Max(d,e,g),$$

$$Max(e,f,g)\}+0.5xMax\{Min(a,b,g),$$

$$Max(b,c,g),Max(d,e,g),Max(e,f,g)\} \tag{1}$$

For the PMED filter computation changed as this, the value g computed in accordance with the edge pattern is used 4 times, and b,c being upper and lower pixel values are used 2 times, and a,c,d,f being a diagonal value is used one time. That is, an applying ratio of the used pixel values is 4:2:1.

The PMED computation in the case of not using the central sample value is as follows:

$$PMED\{a,b,c,d,e,f\}=0.5x \text{ Min}\{\text{Max}(b,c), \text{Max}(d,e),$$

$$\text{Max}(ef)\} + 0.5x\text{Max}\{\text{Min}(a,b),\text{Min}(b,c),$$

$$\text{Min}(d,e),\text{Max}(e,f)\} \tag{2}$$

For the above described PMED computation, the upper and lower pixel values of position to be interpolated are used two times and the diagonal value is used one time.

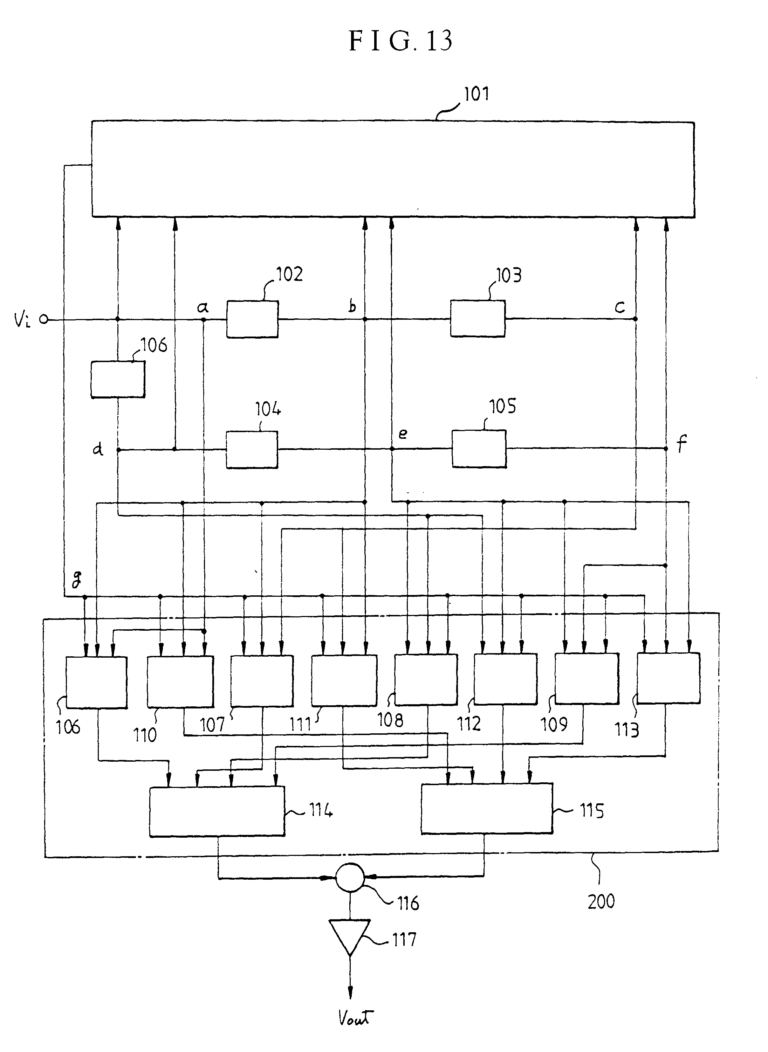

FIG.13 is a diagram of an entire detailed configuration of the PMED filtering section using the PMED filter to consider the edge pattern. It comprises : one line memory section 106 for delaying a video signal Vi for inputting to an interlaced scanning system; sample memory sections 102,103,104,105 for delaying, in turn, the signal delayed at the inputting video signal Vi and the one line memory section 106; a sample value computer 101 for computing the sample value in accordance with the edge pattern by a signal delayed through the sample memory sections 102,103,104,105; a filtering section 200 for combining the sample value g computed at the sample value computer 101 and the delayed samples a,b,c,d,e,f and processing through four 3x1 MIN filters 110,111,112,113 and four 3x1 MAX filters 106,107,108,109 and fitering processing the output of MIN filter at 4x1 MAX filter 115 while the output of the MAX filter at 4x1 MIN filter 114; an adder 116 for synthesizing the output of the 4x1 MAX filter 115 and the 4x1 MIN filter 114; and a 1/2 amplifier 117 for 1/2 ampligying the synthesized signal.

The input video signal Vi of the interlaced scanning system is delayed by the sample memory sections 102,103,104,105, and this delayed signal in sample value in accordance with the edge pattern is computed by the sample value computer 101.

The sample value g computed as described above and the delayed samples a,b,c,d,e,f are filter processed through four 3x1 MIN filters 110,111,112,113 and four 3x1 MAX filters 106,107,108,109 and then the outputs of the MIN filters 110,111,112,113 are filter processed at the 4x1 MAX filter 115, while the outputs of the MAX filters 106,107,108,109 are filter processed at the 4x1 MIN filter 114. The outputs of the 4x1 MAX filter 115 and the 4x1 MIN filter 114 are used to obtain an average value through the adder 116 and the 1/2 amplifier 117, and according to this, a pseudomedian filtering process changed so as to be fit for the interpolation is executed.

Accordingly, the final sample value i to be utilized for the interpolation is computed as follows as described already.

$$PMED\{a,b,c,d,e,f,g\}=0.5x\text{Min}\{\text{Max}(a,b,g),\text{Max}(b,c,g),$$

$$\text{Max}(a,b,g),\text{Min}(b,c,g),\text{Min}(d,e,g),$$

$$\text{Min}(e,f,g)\}$$

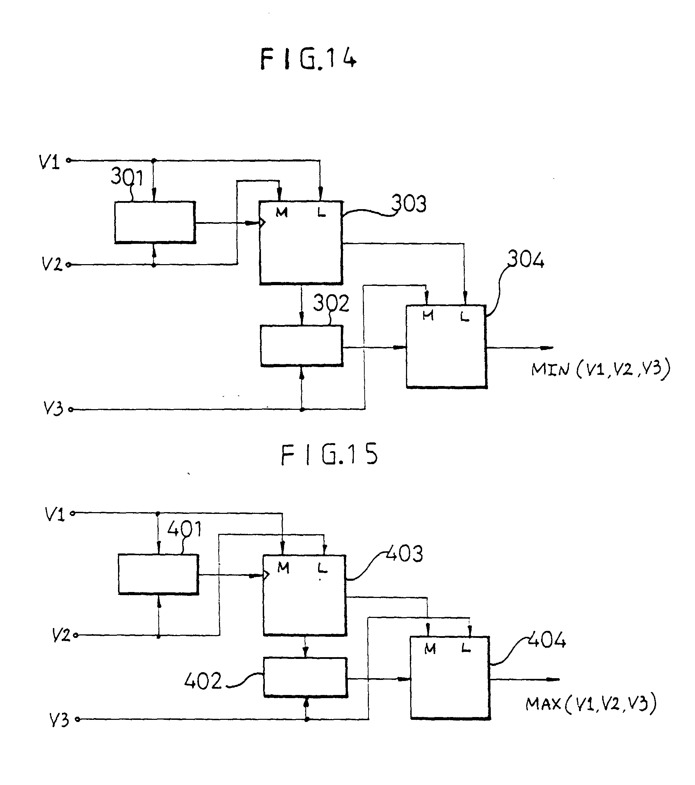

The configuration of 3x1 MIN,MAX configuration is the same as shown in FIG.14 and FIG.15. The 3x1 MIN filter comprises : 2x1 multiplexer 303 for selecting one of signals V1,V2 inputted in accordance with the compared output of the comparator 301 which takes the input of signals V1,V2; a comparator 302 for comparing the output signal of the 2x1 multiplexer 303 and another input signal V3; and 2x1 multiplexer 304 for selecting the 2x1 multiplexer 303 and the input signal V3 in accordance with the output control signal of the comparators 302,402.

The 3x1 MAX filter comprises : a 2x1 multiplexer 403 for selecting one of signals V1,V2 iputted in accordance with the compared output of the comparator 401 which takes the input signals V1,V2 as an input; a comparator 402 for comparing the output signal of the 2x1 multiplexer 403 and another input signal V3; and a 2x1 multiplexer 404 for selecting one of the 2x1 multiplexer 403 and the input signal V3 in accordance with the output control signal of the comparator 402 whereby outputting the MAX output signals V1,V2,V3.

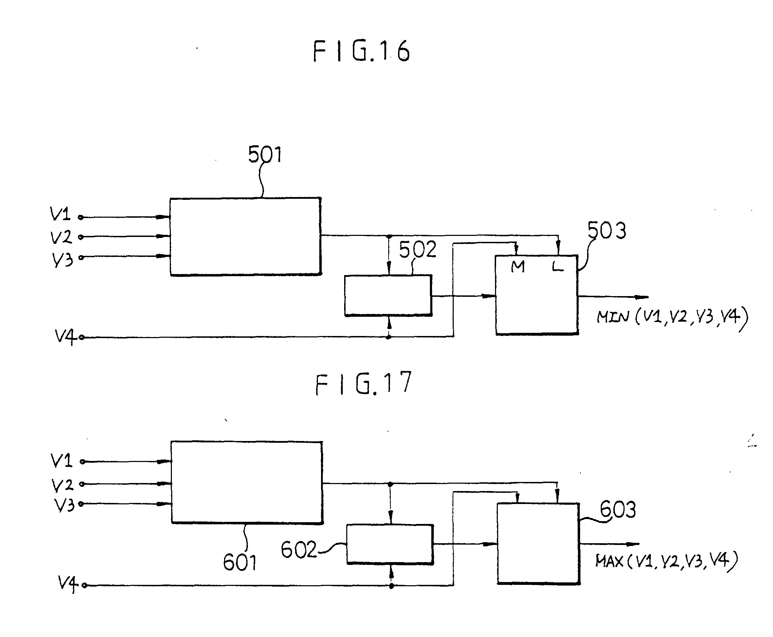

The construction of the 4x1 MIN,MAX filters is the same as shown in FIG.16 and FIG.17. The 4x1 MIN filter comprises : a 3x1 MIN filter 501 for processing by applying the signals V1,V2,V3 thereto; a comparator 502 for comparing the output of the 3x1 MIN filter 501 and another input signal V4; and a 2x1 multiplexer 503 for selecting one of the output of the 3x1 MIN filter 501 and the input signal V4 in accordance with the output signal of the comparator 502 whereby outputting the MIN output signals V1,V2,V3,V4.

The 4x1 MAX filter comprises : a 3x1 MAX filter 601 for processing by applying the signals V1,V2,V3 thereto; a comparator 602 for comparing the output of the 3x1 MAX filter 601 and another input signal V4; and a 2x1 multiplexer 603 for selecting one of the output of the 3x1 MAX filter 601 and the input signal V4 whereby outputting the MAX output signals V1,V2,V3,V4.

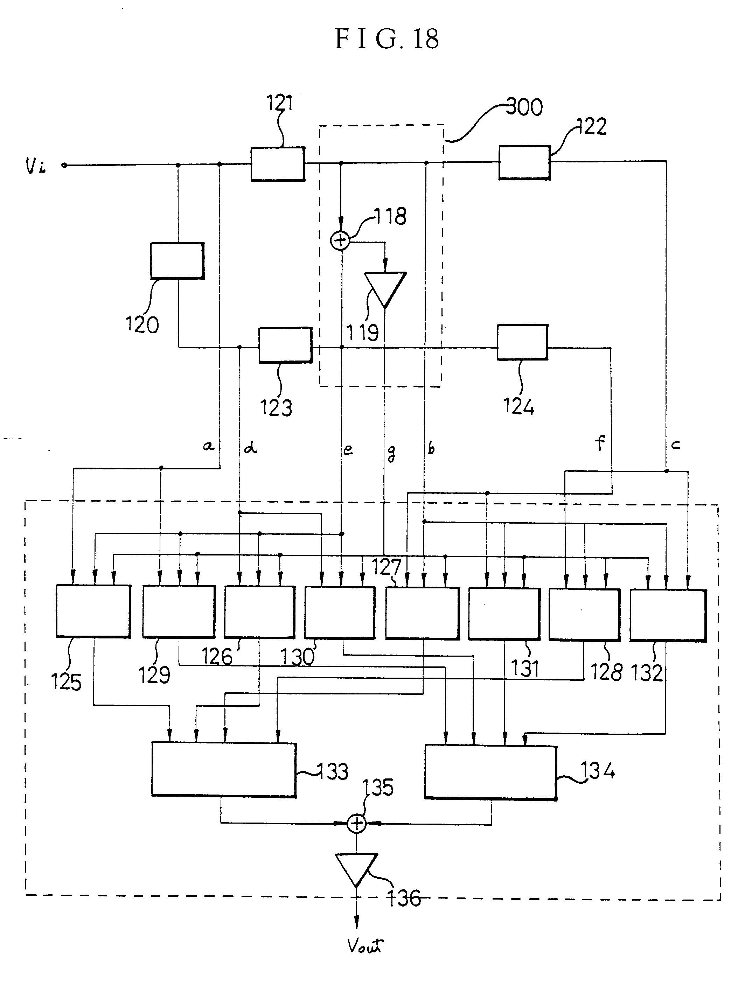

FIG.18 is a diagram showing a PMED filtering section using a PMED filter using an avrage value of the upper and lower pixel values of the sample position to be interpolated as a centre value g, in which a computing section 300 of the centre value g is added to the construction of the PMED filtering section of FIG.13. The computing section 300 of the center value g is constructed by an adder 118 and a 1/2 amplifier 119.

Here, an average value of the pixel is used with $g = \frac{b+e}{2}$ where g, b and e can be seen in FIG.5.

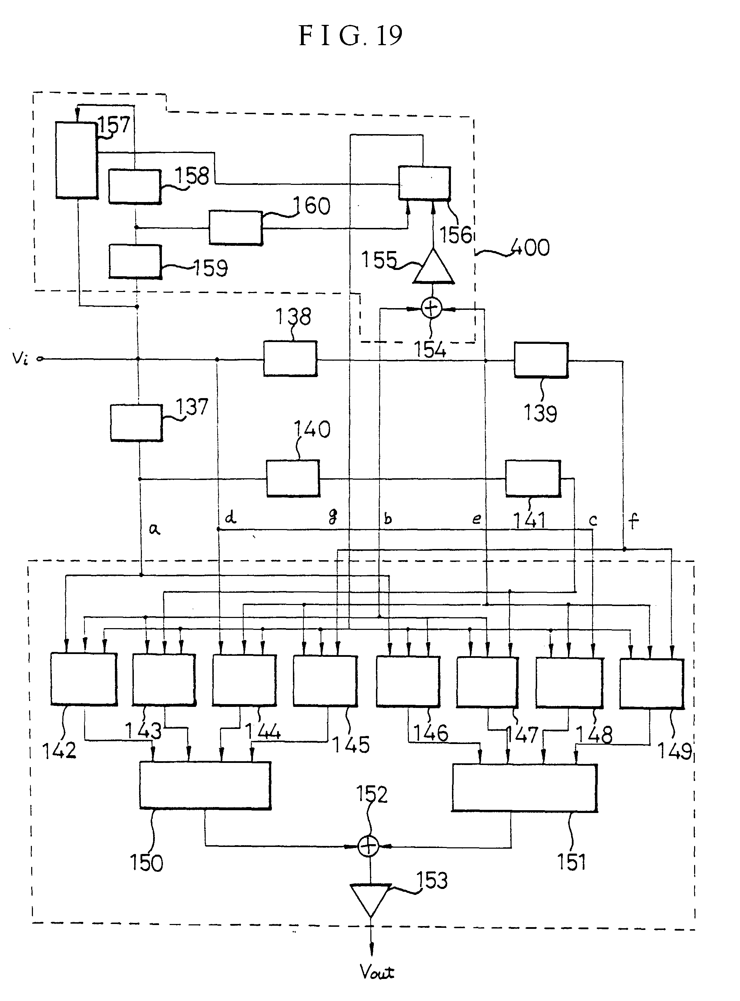

FIG.19 is a circuit diagram of a scanning line interpolator for PMED filtering processing by utilizing movement information, in which a centre value computing section 400 made of a movement detector 157, two one field memory sections 158,159, a sample memory section 160, a multiplexer 156, a 1/2 amplifier 155, and an adder 154 is added to the construction of the PMED filtering section of FIG.13.

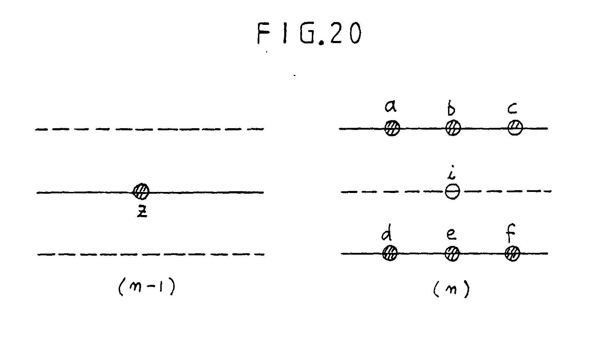

FIG.20 is a conceptive diagram for explaining a system for determining a centre value of the PMED filter by utilizing movement information. When assuming the sample to be interpolated is i, a sample used for the interpolation uses an average value of pixel values a,b,c,d,e,f existing at upper and lower scanning lines of the sample i to be interpolated and a sample z of the previous field, and upper and lower pixel values of the sample i to be interpolated.

If in case that the sample i portion has no movement, g = z is used, and in case of having a movement, $g = \frac{b+e}{2}$ is used, and a pixel value to be finally used for the interpolation becomes an output of the PMED filter as calculated from expression (1).

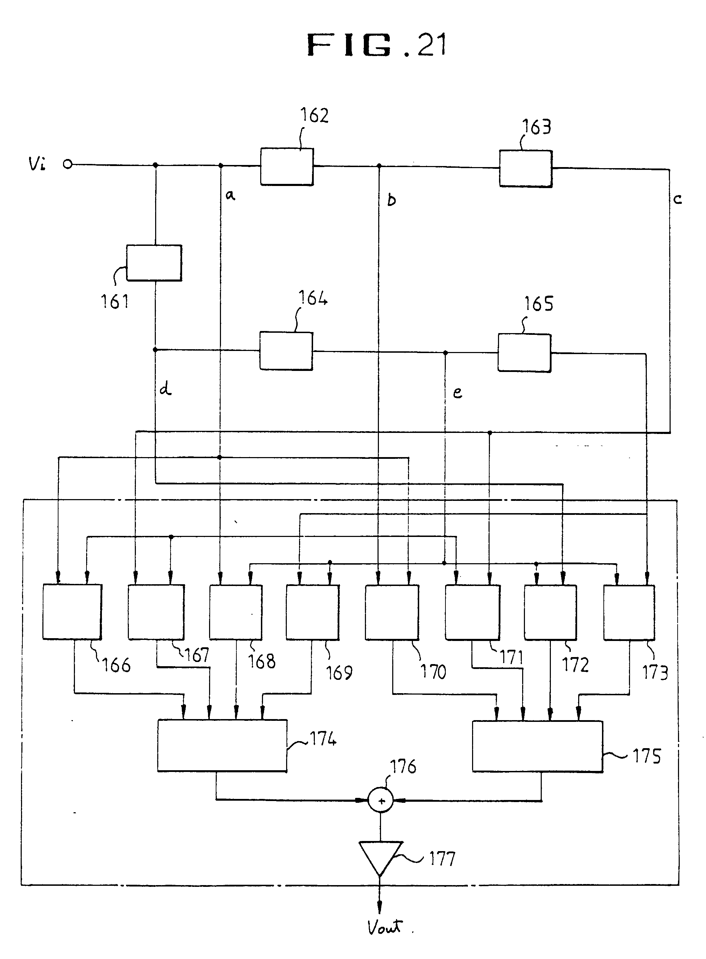

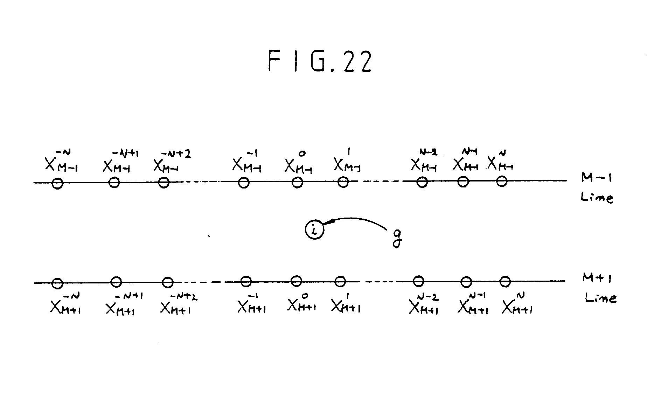

FIG.21 is a block diagram representing a scanning interpolator by the PMED filter not using the centre value g appearing in expression (2), in which 3x1 and, 2x1 instead of MAX filter, and MAX filters 166,167,168,169,170,171,172,173 are used. FIG.22 is a diagram showing an example of an expanded pseudomedian filter for the interpolating sample calculating computation, which is expanded to a case utilizing 4N + 2 pixels existing at the upper and lower scanning lines of the sample i when assuming the sample to be interpolated is i.

In the case of not using the centre value g of the PMED filter, (N+1) x 1 MIN filter seeking a mimimum value of (N+1) pixel values for the pixel existing at the upper and lower scanning lines are used in (2N+2).

The output of the (2N+2) MIN filters are inputted to (2N+2) x 1 MAX filters and a maximum value of the MIN filter output is selected, and the output of (2N+2) MAX filters are inputted to (2N+2) x 1 MIN filters whereby a minimum value of the outputs of the MAX filters is selected. The outputs of the (2N+2)x1 MIN filter and the (2N+2)x1 MAX filter are added and then 1/2 amplified value which is applied to the sample i to be interpolated. The sample to be interpolated is obtained by following expression:

$$i = \mathrm{PMED} \{ X_{M-1}^{-N}, X_{M-1}^{-N+1}, \cdots\cdots, X_{M-1}^{-1}, X_{M-1}^{0}, X_{M-1}^{1}, \cdots\cdots, X_{M-1}^{N-1}, X_{M-1}^{N},$$

$$X_{M+1}^{-N}, X_{M+1}^{-N+1}, \cdots\cdots, X_{M+1}^{-1}, X_{M+1}^{0}, X_{M+1}^{1}, \cdots\cdots, X_{M+1}^{N-1}, X_{M+1}^{N} \}$$

$$= 0.5 \times \mathrm{Max} \times \{ \mathrm{Min}(X_{M-1}^{-N}, X_{M-1}^{-N+1}, \cdots\cdots, X_{M-1}^{-1}, X_{M-1}^{0}),$$

$$\mathrm{Min}(X_{M-1}^{-N+1}, X_{M-1}^{-N+2}, \cdots\cdots, X_{M-1}^{0}, X_{M-1}^{1}),$$

$$\vdots$$

$$\mathrm{Min}(X_{M-1}^{0}, X_{M-1}^{1}, \cdots\cdots, X_{M-1}^{N-1}, X_{M-1}^{N}),$$

$$\mathrm{Min}(X_{M+1}^{-N}, X_{M+1}^{-N+1}, \cdots\cdots, X_{M+1}^{-1}, X_{M+1}^{0}),$$

$$\mathrm{Min}(X_{M+1}^{-N+1}, X_{M+1}^{-N+2}, \cdots\cdots, X_{M+1}^{0}, X_{M+1}^{1}),$$

$$\vdots$$

$$\mathrm{Min}(X_{M+1}^{0}, X_{M+1}^{1}, \cdots\cdots, X_{M+1}^{N-1}, X_{M+1}^{N})\} +$$

$$0.5 \times \mathrm{Min} \{ \mathrm{Max}(X_{M-1}^{-N}, X_{M-1}^{-N+1}, \cdots\cdots, X_{M-1}^{-1}, X_{M-1}^{0}),$$

$$\mathrm{Max}(X_{M-1}^{-N+1}, X_{M-1}^{-N+2}, \cdots\cdots, X_{M-1}^{0}, X_{M-1}^{1}),$$

$$\vdots$$

$$\mathrm{Max}(X_{M-1}^{0},\ X_{M-1}^{1}\ ,\ \cdots\cdots,\ X_{M-1}^{N-1},\ X_{M-1}^{N}),$$

$$\mathrm{Max}(X_{M+1}^{-N},\ X_{M+1}^{-N+1}\ ,\ \cdots\cdots,\ X_{M+1}^{-1},\ X_{M+1}^{0}),$$

$$\mathrm{Max}(X_{M+1}^{-N+1},\ X_{M+1}^{-N+2}\ ,\ \cdots\cdots,\ X_{M+1}^{0},\ X_{M+1}^{1}),$$

$$\vdots$$

$$\mathrm{Max}(X_{M+1}^{0},\ X_{M+1}^{1}\ ,\ \cdots\cdots,\ X_{M+1}^{N-1},\ X_{M+1}^{N})\}$$

(Expression 3)

In the case of using a centre value g of the PMED filter, (N+2) x 1 Min filter for seeking a minimum value of (N+2) pixel values including a centre value g calculated so as to fit to interpolate by using the pixel values existing at the upper and lower scanning lines and the PMED filter is used, and (N+2) x 1 Max filter for seeking a maximum value of the pixels of (N+2) including a centre value g are used in (N+2).

The output of the (2N+2) Min filters are inputted to the (2N+2) x 1 Max filter which selects a maximum value of the outputs of the (N+2) x 1 Max filter, and the output of the (2N+2) Max filter is inputted to the (2N+2) x 1 Min filter which selects the minimum value of the output of the (N+2) x 1 Max filter.

The outputs of the (2N+2) x 1 Min filter and the (2N+1) x 1 Max filter are added and then the 1/2 amplified value is applied to the sample i to be interpolated. The sample to be interpolated is obtained by following expression:

$$i = \text{PMED} \{ X_{M-1}^{-N}, X_{M-1}^{-N+1}, \cdots, X_{M-1}^{-1}, X_{M-1}^{0}, X_{M-1}^{1}, \cdots, X_{M-1}^{N-1}, X_{M-1}^{N},$$

$$X_{M+1}^{-N}, X_{M+1}^{-N+1}, \cdots, X_{M+1}^{-1}, X_{M+1}^{0}, X_{M+1}^{1}, \cdots, X_{M+1}^{N-1}, X_{M+1}^{N}, g\}$$

$$= 0.5 \times \text{Max} \times \{\text{Min}(X_{M-1}^{-N}, X_{M-1}^{-N+1}, \cdots, X_{M-1}^{-1}, X_{M-1}^{0}, g),$$

$$\text{Min}(X_{M-1}^{-N+1}, X_{M-1}^{-N+2}, \cdots, X_{M-1}^{0}, X_{M-1}^{1}, g),$$

$$\cdot$$
$$\cdot$$
$$\cdot$$

$$\text{Min}(X_{M-1}^{0}, X_{M-1}^{1}, \cdots, X_{M-1}^{N-1}, X_{M-1}^{N}, g),$$

$$\text{Min}(X_{M+1}^{-N}, X_{M+1}^{-N+1}, \cdots, X_{M+1}^{-1}, X_{M+1}^{0}, g),$$

$$\text{Min}(X_{M+1}^{-N+1}, X_{M+1}^{-N+2}, \cdots, X_{M+1}^{0}, X_{M+1}^{1}, g),$$

$$\cdot$$
$$\cdot$$
$$\cdot$$
$$\cdot$$
$$\cdot$$

$$\text{Min}(X_{M+1}^{-1}, X_{M+1}^{0}, \cdots, X_{M+1}^{N-1}, X_{M+1}^{N-1}, g)$$

$$\text{Min}(X_{M+1}^{0}, X_{M+1}^{1}, \cdots, X_{M+1}^{N-1}, X_{M+1}^{N}, g)\} +$$

$$0.5 \times \text{Min} \{\text{Max}(X_{M-1}^{-N}, X_{M-1}^{-N+1}, \cdots, X_{M-1}^{-1}, X_{M-1}^{0}, g),$$

$$\text{Max}(X_{M-1}^{-N+1}, X_{M-1}^{-N+2}, \cdots, X_{M-1}^{0}, X_{M-1}^{1}, g),$$

$$\cdot$$
$$\cdot$$
$$\cdot$$
$$\cdot$$

$$\text{Max}(X_{M-1}^{0}, X_{M-1}^{1}, \cdots, X_{M-1}^{N-1}, X_{M-1}^{N}, g),$$

$$Max(X_{M+1}^{-N}, X_{M+1}^{-N+1}, \cdots\cdots, X_{M+1}^{-1}, X_{M+1}^{0}, g),$$

$$Max(X_{M+1}^{-N+1}, X_{M+1}^{-N+2}, \cdots\cdots, X_{M+1}^{0}, X_{M+1}^{1}, g),$$

$$\vdots$$

$$Max(X_{M+1}^{-1}, X_{M+1}^{0}, \cdots\cdots, X_{M+1}^{N-2}, X_{M+1}^{N-1}, g),$$

$$Max(X_{M+1}^{0}, X_{M+1}^{1}, \cdots\cdots, X_{M+1}^{N-1}, X_{M+1}^{N}, g)\}$$

(Expression 3)

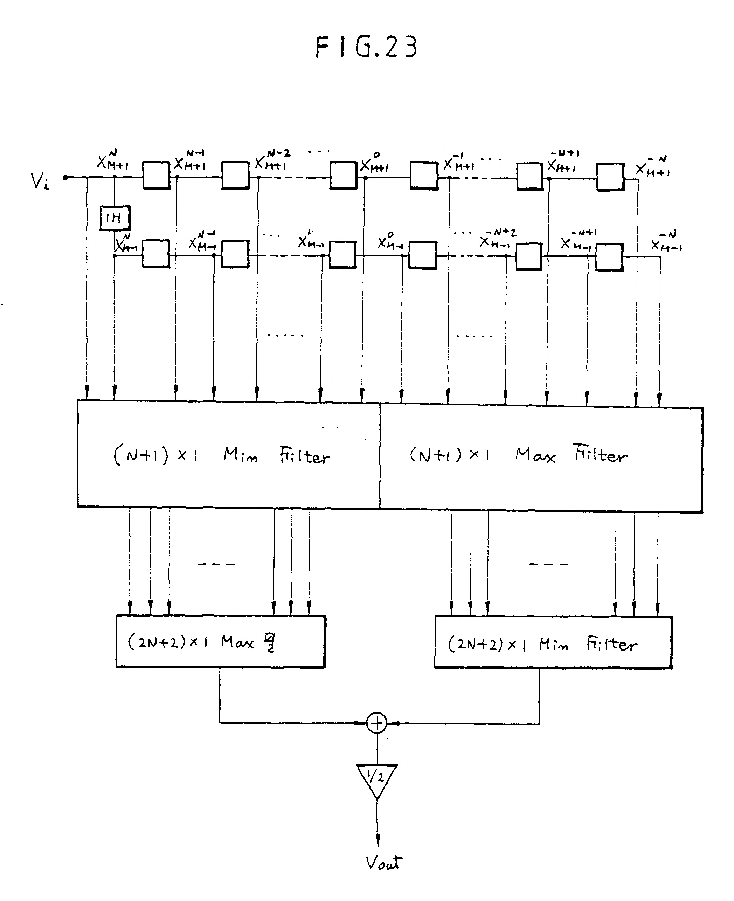

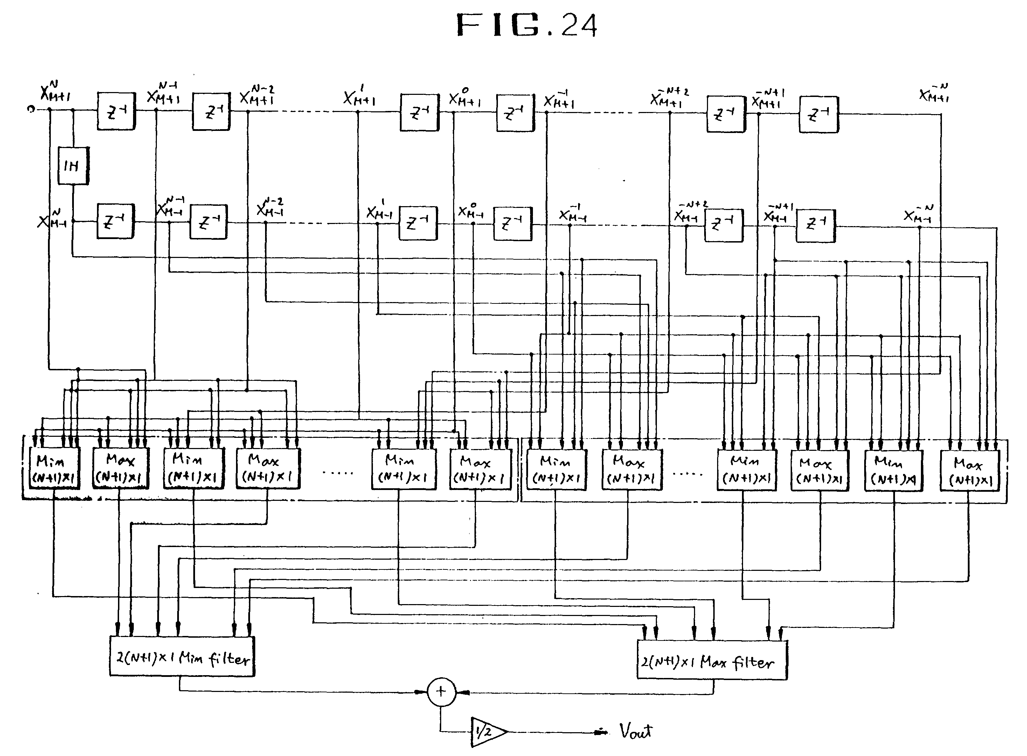

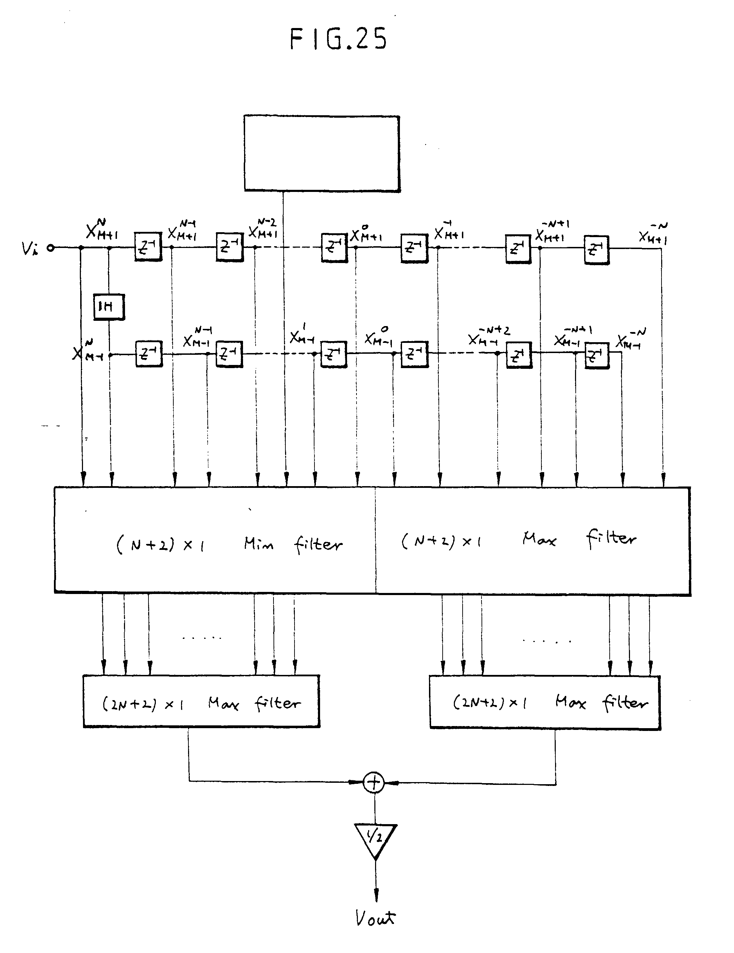

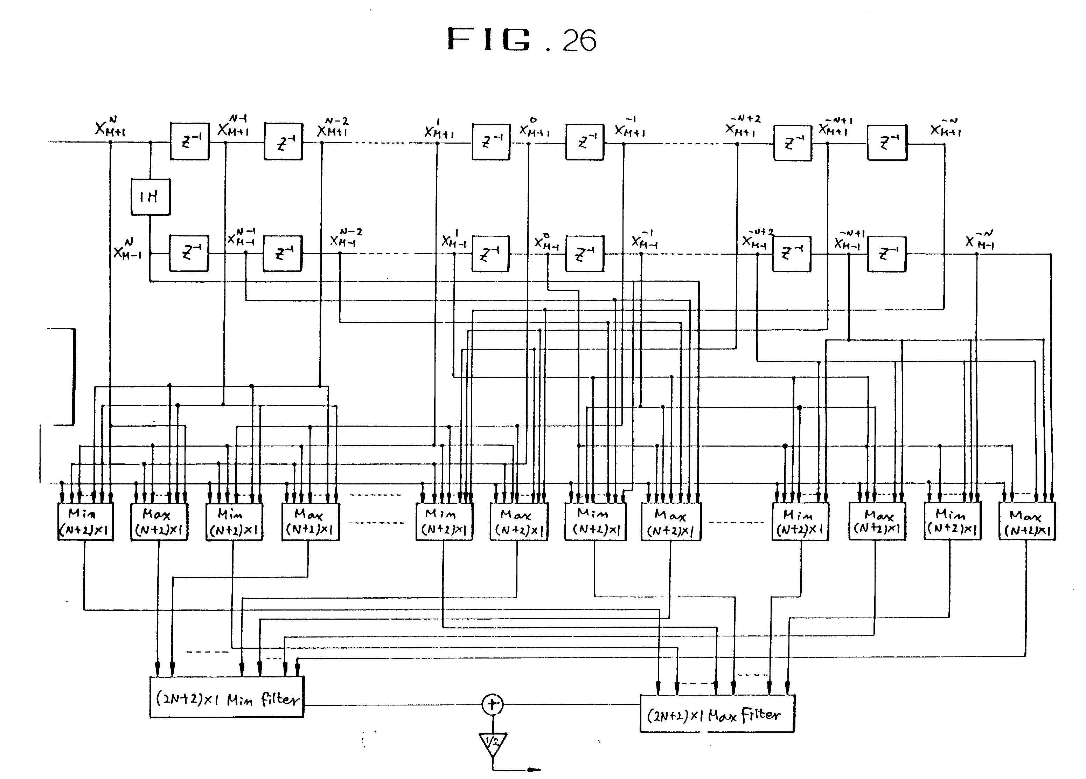

FIG.23 is a block diagram representing the calculation steps in expression (3), and FIG.24 is a detailed circuit diagram of FIG.23. FIG.25 is a block diagram representing the calculation steps in expression (4), and FIG.26 is a detailed circuit diagram of FIG.25.

The present invention can be utilized for other picture processes (for instance, recognition, enhancement, predictive coding, image compression) utilizing a method for judging the edge pattern, and is applicable for TV signal processes such as an enhancement, Y/C separation and the like, using the infinite impulse response IIR filter maintaining a consistency of control signal, and edge restoration becomes possible by using a pseudomedian filter and an edge judging signal.

As described above, a scanning line is interpolated by using a control signal for judging an edge pattern changing to horizontal, vertical and diagonal directions, so that it becomes possible to prevent, shimmering generated in the intra-field interpolation system or the inter-field interpolation system, step edge phenomenon, and remarkable picture quality reducing phenomenon by an incongruous interpolation, and various flicker phenomenon due to generation of aliasing when using a median filter.

In addition, as only one line memory and four sample memory are used, cost is decreased. The present invention also achieves a consistent judging signal upon computing the sample value in accordance with the edge pattern. Thus, the subjective picture quality of entire picture is improved, and a sample value in accordance with the edge pattern and peripheral sample of position to be interpolated are utilized, therefore making the present invention strong against noise.

## Claims

1.   A scanning line converting method for a television receiver comprising setting a centre value(g) of a peripheral pixel value of a pixel(i) to be interpolated in a video signal of an interlaced scanning system in a procedure which includes computing (211) a sample value to be applied to said centre value(g) and a linear combination (212) of non-linear operations being a two-dimensional pseudomedian filtering (PMED) of said peripheral pixel value; 2/1 time compressing respectively the signal generated by said filtering and the video signal of an interlaced scanning system; and selectively switching said 2/1 time compressed signals thereby converting the interlaced scanning system to a progressive scanning system,
CHARACTERISED IN THAT the setting of said centre value (g) of a peripheral pixel value of a pixel(i) to be interpolated is in accordance with the movement in said video signal of an interlaced scanning system,
AND IN THAT the two-dimensional pseudomedian filtering computation has an expression as below with six peripheral pixel values existing at the upper and lower scanning lines of said pixel (i) to be interpolated:

$$PMED\{a,b,c,g,d,e,f\} = 0.5 \, Min\{Max\,(a,b,g,),\, Max(b,c,g),$$

$$Max(d,e,f),\, Max(e,f,g)\} + 0.5$$

$$Max\{Min(a,b,g),\, Min(b,c,g),\, Min$$

$$(d,e,f),\, Min\,(e,f,g)\}$$

wherein a,b,c represent pixel values existing at the upper scanning line, d,e,f, are pixel values existing at the lower scanning line, and g is said centre value,
AND IN THAT
a control signal is generated in accordance with an edge pattern of vertical, horizontal and diagonal directions by combining said six peripheral pixel values; and one of average values of vertical average value, horizontal average value, and diagonal average value, said average values being computed from at least two of said six peripheral pixel values, is selected in accordance with said control signal thereby setting to said centre value(g) of pseudomedian filtering computation.

2. A method according to Claim 1, wherein Said peripheral pixel value is set using P(2N+1) (P=2,3,4,....,N=1,2,3,....) pixels existing at the upper and lower scanning lines of said pixel to be interpolated.

3. A method according to Claim 1, wherein said peripheral pixel value is set from pixel values in a horizontal line with the pixel to be interpolated, and the average value of said pixel values in said horizontal line is set to said centre value.

4. A method according to Claim 1, wherein said control signal generating step includes:

a step for deciding by how much the value of a difference signal exceeds a predetermined threshold, said difference signal comprising components of the upper scanning line and components of the lower scanning line; and
a step for judging the edge pattern to be diagonal in the case of said value being one, a horizontal edge pattern in the case of said value being zero, and a vertical edge pattern in the case of said value being more than two.

5. A method according to Claim 4 wherein said difference signal is calculated according to one of the following values :

D10=a-b,
D11=b-c,
D12=d-e,
D13=e-f,
D14=b-e.

6. A method according to Claim 1, wherein said centre setting step further comprises a step for Infinite Impulse Response (IIR) filtering the edge pattern signal of said diagonal direction, and multiplying said filtered edge pattern signal by the sum of the diagonal direction peripheral pixel values and multiplying said filtered edge pattern signal by the sum of the vertical direction peripheral pixel values components and setting a pixel value by adding said multiplied two values as a centre value.

7. A method according to Claim 1, wherein said two dimensional pseudomedian filtering computation step includes an IIR filtering step.

8. A method according to Claim 1, wherein said centre value setting step includes:

a step for detecting a movement of the video signal; and
a step for setting a pixel value corresponding to a position of said pixel to be interpolated at a previous field of a field existing with pixel to be interpolated, as a centre value when a movement is not detected.

9. A method according to Claim 1, wherein said centre value setting step includes:

a step for detecting a movement of the video signal: and
a step for setting an average value of the upper and lower pixels in a field having a pixel to be interpolated, as a centre value when a movement is detected.

10. A scanning line converter for television receiver comprising means for setting a centre value(g) of a peripheral pixel(i) value of a pixel to be interpolated in a video signal of an interlaced scanning system, wherein said centre value setting means includes means (211) for computing a sample value to be applied to said centre value(g) and a linear combination (212) means of non-linear operations being a two-dimensional pseudomedian filtering (PMED) means of said peripheral pixel value; means for 2/1 time compressing respectively the signal generated by said filtering and the video signal of an interlaced scanning system; and means for selectively switching said 2/1 time compressing signals thereby converting the interlaced scanning system to a progressive scanning system,
CHARACTERISED IN THAT the means or setting said centre value of a peripheral pixel value of a pixel(i) to be interpolated are adapted to be in accordance with the movement of said video signal of an interlaced scanning system,
AND IN THAT the two dimensional pseudomedian filtering means operates according to a computation which has an expression as below with six peripheral pixel values existing at the upper and lower scanning lines of said pixel (i) to be interpolated:

$$PMED\{a,b,c,g,d,e,f\} = 0.5 \, Min\{Max(a,b,g,), \, Max(b,c,g),$$

$$Max(d,e,f), \, Max(e,f,g)\} + 0.5$$

$$Max\{Min(a,b,g), \, Min(b,c,g),$$

$$Min(d,e,f), \, Min(e,f,g)\}$$

wherein a,b,c represent pixel values existing at the upper scanning line, d,e,f, are pixel values at the lower scanning line, and g is said centre value;
AND IN THAT
means are provided for generating a control signal in accordance with an edge pattern of vertical horizontal and diagonal directions by combining said six peripheral pixel values, and for selecting one of average values of vertical average value, horizontal average value and diagonal average value, said average values being computed from at least two of said six peripheral pixel values, in accordance with said control signal thereby setting to said centre value(g) of pseudomedian filtering computation.

11. A converter according to Claim 10, wherein said control signal generating means includes:

means for deciding by how much the value of a difference signal exceeds a predetermined threshold, said difference signal comprising components of the upper scanning line and components of the lower scanning line; and
means for judging the edge pattern to be diagonal in the case of said value being one, a horizontal edge pattern in the case of said value being zero, and a vertical edge pattern in the case of said value being more than two.

12. A converter according to Claim 10, wherein said centre value setting means includes:
means for setting a pixel value corresponding to a position of said pixel to be interpolated at a previous field of a field existing with pixel to be interpolated, as a centre value when a movement is not detected.

13. A converter according to Claim 10, wherein said centre value setting means includes:

means for detecting a movement of the video signal; and
means for setting an average value of the upper and lower pixels in a field having a pixel to be interpolated, as a centre value when a movement is detected.

**Patentansprüche**

1. Abtastzeilen-Umwandlungsverfahren für einen Fernsehempfänger, das das Setzen eines Zentrumswertes (g) eines Randpixelwertes eines zu interpolierenden Pixels (i) in einem Videosignal eines Zeilensprungsystems in einer Prozedur aufweist, die das Berechnen eines Abtastwertes, der auf den Zentrumswert (g) angewendet werden soll, und einer linearen Kombination von nicht-linearen Operationen, die eine zweidimensionale Pseudomedian-Filterung (PMED) des Randpixelwertes sind; eine Zeitkomprimierung im Verhältnis 2:1 des Signals, das durch die Filterung erzeugt wird, bzw. des Videosignals eines Zeilensprungsystems; und ein selektives Schalten der 2:1-zeitkomprimierten Signale, wodurch das Zeilensprungsystem in ein zeilensequentes Abtastsystem umgewandelt wird, dadurch **gekennzeichnet**, daß das Setzen des Zentrumswertes (g) eines Randpixelwertes eines zu interpolierenden Pixels (i) entsprechend der Bewegung in dem Videosignal eines Zeilensprungsystems ist, und daß die Berechnung der zweidimensionalen Pseudomedian-Filterung einen Ausdruck, wie er weiter unten steht, aufweist, wobei sechs Randpixelwerte an der oberen und der unteren Abtastzeile zu dem zu interpolierenden Pixel (i) existieren:

$$\text{PMED}\{a, b, c, g, d, e, f\} = 0,5 \, \text{MIN}\{\text{MAX}(a, b, g), \text{MAX}(b, c, g), \text{MAX}(d, e, f),$$

$$\text{MAX}(e, f, g)\} + 0,5 \, \text{MAX}\{\text{MIN}(a, b, g), \text{MIN}(b, c, g),$$

$$\text{MIN}(d, e, f), \text{MIN}(e, f, g)\}$$

worin a, b, c Pixelwerte repräsentieren, die bei der oberen Abtastzeile existieren; d, e, f Pixelwerte sind, die bei der unteren Abtastzeile existieren; und g der Zentrumswert ist, und daß ein Steuersignal entsprechend einem Kantenmuster von vertikalen, horizontalen und diagonalen Richtungen dadurch erzeugt wird, daß die sechs Randpixelwerte kombiniert werden; und einer der Mittelwerte aus dem vertikalen Mittelwert, dem horizontalen Mittelwert und dem diagonalen Mittelwert entsprechend dem Steuersignal ausgewählt wird, wodurch der Zentrumswert (g) der Berechnung der Pseudomedian-Filterung gesetzt wird, wobei die Mittelwerte aus wenigstens zwei der sechs Randpixelwerte errechnet werden.

2. Verfahren nach Anspruch 1, dadurch **gekennzeichnet**, daß der Randpixelwert unter Verwendung von P (2N + 1) (P = 2, 3, 4, ..., N = 1, 2, 3, ...) Pixeln gesetzt wird, die bei der oberen und der unteren Abtastzeile des Pixels, das interpoliert werden soll, existieren.

3. Verfahren nach Anspruch 1, dadurch **gekennzeichnet**, daß der Randpixelwert aus Pixelwerten in einer horizontalen Zeile mit dem Pixel, das interpoliert werden soll, gesetzt wird, und daß der Mittelwert des Pixelwertes in dieser horizontalen Zeile auf den Zentrumswert gesetzt wird.

4. Verfahren nach Anspruch 1, dadurch **gekennzeichnet**, daß der Steuersignal-Erzeugungsschritt aufweist:

   - einen Schritt, der dazu dient zu entscheiden, um wieviel der Wert eines Differenzsignales einen vorbestimmten Schwellenwert übersteigt, wobei dieses Differenzsignal Komponenten der oberen Abtastzeile und Komponenten der unteren Abtastzeile aufweist; und
   - einen Schritt, der dazu dient zu beurteilen, daß in dem Falle, daß dieser Wert gleich Eins ist, das Kantenmuster diagonal ist, daß in dem Falle, daß dieser Wert gleich Null ist, das Kantenmuster ein Horizontalkantenmuster ist, und daß in dem Falle, daß dieser Wert größer als Zwei ist, das Kantenmuster ein Vertikalkantenmuster ist.

5. Verfahren nach Anspruch 4, dadurch **gekennzeichnet**, daß das Differenzsignal entsprechend einem der folgenden Werte berechnet wird:
   D10 = a - b, D11 = b - c, D12 = d - e, D13 = e - f, D14 = b - e.

6. Verfahren nach Anspruch 1, dadurch **gekennzeichnet**, daß der Zentrumssetzschritt des weiteren einen Schritt aufweist, der dazu dient, das Kantenmustersignal der diagonalen Richtung einer Unendlichimpulsantwort -(IIR)-Filterung zu unterziehen und das gefilterte Kantenmustersignal mit der Summe der Diagonalrichtung-Randpixelwerte zu multiplizieren und das gefilterte Kantenmustersignal mit der Summe der Vertikalrichtung-Randpixelwertekomponenten zu multiplizieren und einen Pixelwert dadurch als einen Zentrumswert zu setzen, daß diese beiden multiplizierten Werte addiert werden.

7. Verfahren nach Anspruch 1, dadurch **gekennzeichnet**, daß der zweidimensionale Pseudomedian-Filterungs-Berechnungsschritt einen IIR-Filterungsschritt umfaßt.

8. Verfahren nach Anspruch 1, dadurch **gekennzeichnet**, daß der Zentrumswert-Setzschritt aufweist:

   - einen Schritt, der dazu dient, eine Bewegung des Videosignals zu erkennen; und
   - einen Schritt, der dazu dient, einen Pixelwert, der einer Position des Pixels, das interpoliert werden soll, bei einem vorangegangenen Halbbild zu einem Halbbild, in dem das Pixel, das interpoliert werden soll, existiert, entspricht, als einen Zentrumswert zu setzen, wenn eine Bewegung nicht erkannt wird.

9. Verfahren nach Anspruch 1, dadurch **gekennzeichnet**, daß der Zentrumswert-Setzschritt aufweist:

   - einen Schritt, der dazu dient, eine Bewegung des Videosignals zu erkennen; und
   - einen Schritt, der dazu dient, einen Mittelwert der oberen und unteren Pixel in einem Halbbild, das ein Pixel, das interpoliert werden soll, aufweist, als einen Zentrumswert zu setzen, wenn eine Bewegung erkannt wird.

10. Abtastzeilenwandler für einen Fernsehempfänger, der Mittel aufweist, die dazu dienen, einen Zentrumswert (g) eines Randpixelwertes (i) eines zu interpolierenden Pixels in einem Videosignal eines Zeilensprungsystems zu setzen, wobei das Zentrumswert-Setzmittel Mittel (211), die dazu dienen, einen Abtastwert, der auf den Zentrumswert (g) angewendet werden soll, zu berechnen, und ein Linear-Kombination-Mittel (212) von nicht-linearen Operationen aufweist, das ein zweidimensionales Pseudomedian-Filterung-(PMED-)Mittel des Randpixelwertes ist; Mittel aufweist, die dazu dienen, das Signal, das durch die Filterung erzeugt wird, bzw. das Videosignal eines Zeilensprungsystems im Verhältnis 2:1 zeitzukomprimieren; und Mittel aufweist, die dazu dienen, die 2:1-zeitkomprimierten Signale selektiv zu schalten, wodurch das Zeilensprungsystem in ein zeilensequentes Abtastsystem umgewandelt wird,
    dadurch gekennzeichnet, daß das Mittel für das Setzen des Zentrumswertes (g) eines Randpixelwertes eines zu interpolierenden Pixels (i) entsprechend der Bewegung des Videosignals eines Zeilensprungsystems angepaßt ist; und daß das Mittel für die Berechnung der zweidimensionalen Pseudomedian-Filterung entsprechend einer Berechnung arbeitet, die einen Ausdruck, wie er weiter unten steht, aufweist, wobei sechs Randpixelwerte an der oberen und der unteren Abtastzeile zu dem zu interpolierenden Pixel (i) existieren:

$$\text{PMED}\{a, b, c, g, d, e, f\} = 0{,}5 \ \text{MIN}\{\text{MAX}(a, b, g), \text{MAX}(b, c, g), \text{MAX}(d, e, f),$$

$$\text{MAX}(e, f, g)\} + 0{,}5 \ \text{MAX}\{\text{MIN}(a, b, g), \text{MIN}(b, c, g),$$

$$\text{MIN}(d, e, f), \text{MIN}(e, f, g)\}$$

    worin a, b, c Pixelwerte repräsentieren, die bei der oberen Abtastzeile existieren; d, e, f Pixelwerte bei der unteren Abtastzeile sind; und g der Zentrumswert ist;
    und daß Mittel vorgesehen sind, die dazu dienen, ein Steuersignal entsprechend einem Kantenmuster aus vertikalen, horizontalen und diagonalen Richtungen dadurch zu erzeugen, daß die sechs Randpixelwerte kombiniert werden, und aus dem vertikalen Mittelwert, dem horizontalen Mittelwert und dem diagonalen Mittelwert einer der Mittelwerte entsprechend dem Steuersignal ausgewählt wird, wodurch der Zentrumswert (g) der Pseudomedian-Filterungsberechnung gesetzt wird, wobei die Mittelwerte aus wenigstens zwei der sechs Randpixelwerte errechnet werden.

11. Wandler nach Anspruch 10, dadurch **gekennzeichnet**, daß das Steuersignal-Erzeugungsmittel folgendes aufweist:

   - Mittel, die dazu dienen zu entscheiden, um wieviel der Wert eines Differenzsignals einen vorbestimmten Schwellenwert übersteigt, wobei das Differenzsignal Komponenten der oberen Abtastzeile und Komponenten der unteren Abtastzeile aufweist; und
   - Mittel, die dazu dienen zu beurteilen, daß in dem Falle, daß dieser Wert gleich Eins ist, das Kantenmuster diagonal ist, daß in dem Falle, daß dieser Wert gleich Null ist, dieses Kantenmuster ein Horizontalkantenmuster ist, und daß in dem Falle, daß dieser Wert größer als Zwei ist, das Kantenmuster ein Vertikalkantenmuster ist.

12. Wandler nach Anspruch 10, dadurch **gekennzeichnet**, daß das Zentrumswert-Setzmittel folgendes aufweist:

- Mittel, die dazu dienen, einen Pixelwert, der einer Position des Pixels, das interpoliert werden soll, in einem vorangegangenen Halbbild zu einem Halbbild, in dem das Pixel, das interpoliert werden soll, existiert, entspricht, als einen Zentrumswert zu setzen, wenn eine Bewegung nicht erkannt wird.

**13.** Wandler nach Anspruch 10, dadurch **gekennzeichnet**, daß das Zentrumswert-Setzmittel folgendes aufweist:

- Mittel, die dazu dienen, eine Bewegung des Videosignals zu erkennen; und
- Mittel, die dazu dienen, einen Mittelwert der oberen und unteren Pixel in einem Halbbild, das ein Pixel, das interpoliert werden soll, aufweist, als einen Zentrumswert zu setzen, wenn eine Bewegung erkannt wird.


## Revendications

**1.** Un procédé de conversion de lignes de balayage pour un récepteur de télévision englobant la fixation d'une valeur centrale (g) d'une valeur de pixel périphérique d'un pixel (i) à interpoler dans un signal vidéo d'un système à balayage entrelacé, dans le cadre d'une procédure qui inclut le calcul (211) d'une valeur échantillon à appliquer à ladite valeur centrale (g) et une combinaison linéaire (212) d'opérations non linéaires étant un filtrage pseudo-médian bidirectionnel (PMED) de ladite valeur de pixel périphérique ; compression 2/1 fois respectivement du signal généré par ledit filtrage et du signal vidéo d'un système à balayage entrelacé ; et commutation sélective de ces signaux comprimés 2/1 fois afin de convertir le système à balayage entrelacé en un système à balayage progressif,
CARACTERISE EN CE QUE la fixation de ladite valeur centrale (g) d'une valeur de pixel périphérique d'un pixel (i) à interpoler est conforme au mouvement, au sein dudit signal vidéo, d'un système à balayage entrelacé,
ET EN CE QUE le calcul du filtrage pseudo-médian bidirectionnel a une expression telle que ci-dessous, avec six valeurs de pixel périphérique existant aux lignes de balayage supérieure et inférieure dudit pixel (i) à interpoler :

$$PMED\{a,b,c,g,d,e,f\} = 0,5 \; mini\{maxi(a,b,g),$$

$$maxi(b,c,g\;),maxi(d,e,f),$$

$$maxi(e,f,g)\} + 0,5$$

$$maxi\{mini(a,b,g),\; mini(b,c,g),$$

$$mini(d,e,f),\; mini(e,f,g)\}$$

dans laquelle a,b,c représentent des valeurs de pixel qui existent sur la ligne de balayage supérieure, d,e,f sont des valeurs de pixel qui existent sur la ligne de balayage inférieure, et g est ladite valeur centrale,
ET EN CE QUE
un signal de commande est généré conformément à une configuration sur les bords des directions verticale, horizontale et diagonale en combinant lesdites six valeurs de pixel périphérique ; et l'une des valeurs moyennes de la valeur moyenne verticale, de la valeur moyenne horizontale et de la valeur moyenne diagonale, lesdites valeurs moyennes étant calculées à partir de deux au moins desdites six valeurs de pixel périphérique, est sélectionnée selon ledit signal de commande afin de fixer ladite valeur centrale (g) de calcul de filtrage pseudo-médian.

**2.** Un procédé selon la Revendication 1, selon lequel ladite valeur de pixel périphérique est fixée en utilisant P(2N+1) (P=2,3,4,..., N=1,2,3,...) pixels qui existent sur les lignes de balayage supérieure et inférieure dudit pixel à interpoler.

**3.** Un procédé selon la Revendication 1, selon lequel ladite valeur de pixel périphérique est fixée à partir de valeurs de pixel dans une ligne horizontale avec le pixel à interpoler, et la valeur moyenne desdites valeurs de pixel dans ladite ligne horizontale est fixée sur ladite valeur centrale.

**4.** Un procédé selon la Revendication 1, selon lequel ladite étape de génération de signaux de commande englobe :

une étape de décision du degré jusqu'auquel la valeur d'un signal différence excède un seuil prédéterminé, ledit signal différence englobant des éléments de la ligne de balayage supérieure et des éléments de la ligne de balayage inférieure ; et

une étape pour juger que la configuration sur les bords est diagonale dans le cas où ladite valeur est un, est une configuration sur les bords horizontale dans le cas où ladite valeur est zéro, et est une configuration sur les bords verticale dans le cas où ladite valeur excède deux.

5. Un procédé selon la Revendication 4, selon lequel ledit signal différence est calculé selon l'une des valeurs suivantes :

D10 = a-b
D11 = b-c
D12 = d-e
D13 = e-f
D14 = b-e

6. Un procédé selon la Revendication 1, selon lequel ladite étape de fixation du centre englobe de plus une étape de filtrage de la réponse impulsionnelle infinie (RII) du signal de configuration sur les bords de ladite direction diagonale, et la multiplication dudit signal filtré de configuration sur les bords par la somme des éléments de valeur de pixel périphérique dans la direction diagonale et multiplication dudit signal filtré de configuration sur les bords par la somme des éléments de valeur de pixel périphérique dans la direction verticale, et fixation d'une valeur de pixel en additionnant lesdites deux valeurs multipliées à titre de valeur centrale.

7. Un procédé selon la Revendication 1, selon lequel ladite étape de calcul de filtrage pseudo-médian bidirectionnel inclut une étape de filtrage RII.

8. Un procédé selon la Revendication 1, selon lequel ladite étape de fixation de la valeur centrale englobe :

une étape de détection d'un mouvement du signal vidéo; et

une étape de fixation d'une valeur de pixel qui correspond à une position dudit pixel à interpoler dans une trame précédente d'une trame existante avec le pixel à interpoler, à titre de valeur centrale lorsqu'un mouvement n'est pas détecté.

9. Un procédé selon la Revendication 1, selon lequel ladite étape de fixation de la valeur centrale englobe :

une étape de détection d'un mouvement du signal vidéo; et

une étape de fixation d'une valeur moyenne des pixels supérieur et inférieur dans une trame ayant un pixel à interpoler, à titre de valeur centrale lorsqu'un mouvement est détecté.

10. Un convertisseur de lignes de balayage pour récepteur de télévision englobant des moyens de fixation d'une valeur centrale (g) d'une valeur de pixel périphérique (i) d'un pixel à interpoler dans un signal vidéo d'un système à balayage entrelacé, selon lequel lesdits moyens de fixation d'une valeur centrale englobent des moyens (211) pour calculer une valeur échantillon à appliquer à ladite valeur centrale (g) et des moyens de combinaison linéaire (212) d'opérations non linéaires étant des moyens de filtrage pseudo-médian bidirectionnel (PMED) de ladite valeur de pixel périphérique ; des moyens respectifs de compression 2/1 fois du signal généré par ledit filtrage et du signal vidéo d'un signal à balayage entrelacé ; et des moyens de commutation sélective desdits signaux à compression 2/1 fois pour convertir le système à balayage entrelacé en un système à affichage progressif, CARACTERISE EN CE QUE les moyens de fixation de ladite valeur centrale d'une valeur de pixel périphérique d'un pixel (i) à interpoler sont adaptés pour concorder avec le mouvement dudit signal vidéo d'un système à balayage entrelacé, ET EN CE QUE les moyens de filtrage pseudo-médian bidirectionnel fonctionnent selon un calcul ayant une expression telle que ci-dessous avec six valeurs de pixel périphérique qui existent aux lignes de balayage supérieure et inférieure dudit pixel (i) à interpoler :

$$PMED \{a,b,c,g,d,e,f\} = 0,5 \, mini\{maxi(a,b,g),$$

$$maxi(b,c,g) \, , \, maxi(d,e,f),$$

$$maxi(e,f,g)\} + 0,5$$

$$\text{maxi}\{\text{mini}(a,b,g),\ \text{mini}(b,c,g),$$

$$\text{mini}(d,e,f),\ \text{mini}(e,f,g)\}$$

dans laquelle a,b,c représentent des valeurs de pixel qui existent sur la ligne de balayage supérieure, d,e,f sont des valeurs de pixel qui existent sur la ligne de balayage inférieure, et g est ladite valeur centrale,
ET EN CE QUE
des moyens sont prévus pour générer un signal de commande conformément à une configuration sur les bords de directions verticale, horizontale et diagonale en combinant lesdites six valeurs de pixel périphérique, et pour sélectionner l'une des valeurs moyennes parmi la valeur moyenne verticale, la valeur moyenne horizontale et la valeur moyenne diagonale, lesdites valeurs moyennes étant calculées à partir d'au moins deux desdites six valeurs de pixel périphériques conformément audit signal de commande, fixant ainsi sur la valeur centrale (g) du calcul du filtrage pseudo-médian.

11. Un convertisseur selon la Revendication 10, dans lequel lesdits moyens de génération de signaux de commande englobent :

des moyens de décision du degré jusque auquel la valeur d'un signal différence excède un seuil prédéterminé, ledit signal différence englobant des éléments de la ligne de balayage supérieure et des éléments de la ligne de balayage inférieure ; et
des moyens pour juger que la configuration sur les bords est diagonale au cas où ladite valeur est un, est une configuration sur les bords horizontale au cas où ladite valeur est zéro, et est une configuration sur les bords verticale au cas où ladite valeur excède deux.

12. Un convertisseur selon la Revendication 10, dans lequel lesdits moyens de fixation d'une valeur centrale englobent :
des moyens de fixation d'une valeur de pixel qui correspond à une position dudit pixel à interpoler dans une trame précédente d'une trame existante avec le pixel à interpoler, à titre de valeur centrale lorsqu'un mouvement n'est pas détecté.

13. Un convertisseur selon la Revendication 10, dans lequel lesdits moyens de fixation d'une valeur centrale englobent :

des moyens de détection d'un mouvement du signal vidéo ; et
des moyens de fixation d'une valeur moyenne des pixels supérieur et inférieur dans une trame ayant un pixel à interpoler, à titre de valeur centrale lorsqu'un mouvement est détecté.

F I G. 1(A)

F I G. 1(B)

F I G. 2(A)

F I G 2(B)

F I G.3(A)

SW3

9    10    11    Yout

F I G.3(B)

a    ι
i    c
b    ι
i    d

F I G.4(A)　　F I G.4(B)　　F I G.4(C)　　F I G.4(D)

100 IRE
50 IRE
0 IRE

FIG. 5

| a | b | c |
|---|---|---|
| d | e | f |
| g | h | i |

F I G.6(A)

(MED)   (PMED)

F I G.6(B)

(.MED)   (PMED)

▨ : 2   □ : 0   ◪ : 1

F I G.6(C)

(MED)   (PMED)

24

# F I G. 7

21

22

$V_i$ ○——————→

SW21

23

→ $V_{out}$

# F I G. 8

211

212

$V_i$ ○——————

| computing section | PMED filter |

———→ $V_{out}$

# FIG.9

F I G. 10

# F I G.11

# F I G.12

FIG. 13

FIG.14

MIN (V1,V2,V3)

FIG.15

MAX(V1,V2,V3)

F I G.16

F I G.17

# FIG. 18

# F I G. 19

# F I G.20

$(m-1)$                    $(m)$

# FIG.21

# F I G. 22

$X_{M-1}^{-N}$  $X_{M-1}^{-N+1}$  $X_{M-1}^{-N+2}$   $X_{M-1}^{-1}$  $X_{M-1}^{0}$  $X_{M-1}^{1}$   $X_{M-1}^{N-2}$  $X_{M-1}^{N-1}$  $X_{M-1}^{N}$

M−1 Line

$X_{M+1}^{-N}$  $X_{M+1}^{-N+1}$  $X_{M+1}^{-N+2}$   $X_{M+1}^{-1}$  $X_{M+1}^{0}$  $X_{M+1}^{1}$   $X_{M+1}^{N-2}$  $X_{M+1}^{N-1}$  $X_{M+1}^{N}$

M+1 Line

# F I G.23

FIG.24

# FIG.25

$V_i$

$X_{M+1}^{N}$  $z^{-1}$  $X_{M+1}^{N-1}$  $z^{-1}$  $X_{M+1}^{N-2}$  $z^{-1}$  $X_{M+1}^{0}$  $z^{-1}$  $X_{M+1}^{-1}$  $z^{-1}$  $X_{M+1}^{-N+1}$  $z^{-1}$  $X_{M+1}^{-N}$

$1H$

$X_{M-1}^{N}$  $z^{-1}$  $X_{M-1}^{N-1}$  $z^{-1}$  $X_{M-1}^{1}$  $z^{-1}$  $X_{M-1}^{0}$  $z^{-1}$  $X_{M-1}^{-N+2}$  $z^{-1}$  $X_{M-1}^{-N+1}$  $z^{-1}$  $X_{M-1}^{-N}$

$(N+2) \times 1$    Min filter      $(N+2) \times 1$    Max filter

$(2N+2) \times 1$   Max filter        $(2N+2) \times 1$   Max filter

$\oplus$

$1/2$

$V_{out}$

FIG. 26